# EUROPÄISCHE PATENTANMELDUNG

(11) **EP 4 094 826 A1**
(43) Veröffentlichungstag der Anmeldung: **30.11.2022**
(21) Anmeldenummer: 22181027.8
(22) Anmeldetag: 04.05.2015
(51) Int. Cl.: B01F 25/83, B30B 15/30

(54) **VORRICHTUNG ZUR HERSTELLUNG EINES ROHLINGS NEBST VERFAHREN HIERZU UND ROHLING**

(30) Priorität: 05.05.2014 DE 102014006374
(62) Teilanmeldung aus: 15722488.2
(71) Anmelder: GKN Sinter Metals Engineering GmbH, 42477 Radevormwald (DE)
(72) Erfinder: Casellas, Antonio, 53721 Siegburg (DE); Dollmeier, Klaus, 73463 Westhausen (DE); Dr. Ernst, Eberhard, 36124 Eichenzell (DE); Özkan, Anastasia, 58456 Witten (DE); Schupp, Thomas, 42477 Radevormwald (DE)
(74) Vertreter: karo IP

(57) **Zusammenfassung**

Die vorliegende Erfindung betrifft eine Vorrichtung, vorzugsweise Presse, umfassend eine zu befüllende Kavität, zumindest eine erste Materialzuführung eines ersten Materials und eine zweite Materialzuführung eines zweiten Materials, wobei die erste und die zweite Materialzuführung getrennt voneinander angeordnet sind, mit einer Zuführvorrichtung zum Zuführen des ersten und des zweiten Materials in die zu befüllende Kavität, wobei die Zuführvorrichtung einen Mündungsquerschnitt mit zumindest einem ersten Bereich des Mündungsquerschnitts für das erste Material und mit einem davon abgetrennten zweiten Bereich des Mündungsquerschnitts für das zweite Material aufweist zum vorzugsweise parallelen, örtlich getrennten Befüllen der Kavität. Hierbei hat die Befülleinrichtung (18, 24, 120) insbesondere ein Einwirkelement zur Interaktion mit zumindest einem in die Kavität (14, 112) eingebrachten Material, insbesondere zur Interaktion zwecks Ausrichtens mindestens eines nichtkugeligen Materials und/oder zur Beeinflussung der Verteilung des mindestens einen Materials. Des Weiteren sind ein Verfahren wie auch ein Rohling vorgeschlagen.

## Beschreibung

Die vorliegende Patentanmeldung nimmt die Priorität der deutschen Patentanmeldung 10 2014 006 374.7 vom 5. Mai 2014 in Anspruch, deren Inhalt hiermit durch Bezugnahme zum Gegenstand der vorliegenden Patentanmeldung gehören.

Die vorliegende Erfindung betrifft eine Vorrichtung umfassend eine Kavität, die mit einem rieselfähigen Material für die Herstellung eines Rohlings befüllbar ist. Ferner betrifft die Erfindung eine Zuführvorrichtung zur Verwendung in der Vorrichtung, ein Verfahren zur Herstellung eines Rohlings und einen Rohling, vorzugsweise als Verbundmaterial.

Es ist bekannt, dass insbesondere bei der Herstellung von sinterbaren Grünlingen Kavitäten mit dem zu sinternden Material über eine Zuführvorrichtung, oftmals auch Füllschuh genannt, befüllt wird. Hierzu wird der Füllschuh (auch Feeder oder Füller genannt) in einer Longitudinalbewegung über die zu befüllende Kavität verfahren, befüllt diese und kehrt sodann gegebenenfalls in seine Ausgangsposition zurück. Die Kavität wird hierbei möglichst gleichmäßig mit dem Material befüllt, das aus dem Füllschuh zugeführt wird.

Aus EP-A-1 348 527, EP-A-2 221 131, EP-A-1 407 877 und JP-A-60162702 sind Verfahren und Vorrichtungen zur Herstellung von Bauteilen unter Verwendung von Formgebungswerkzeugen bekannt, bei denen Pulver mindestens zweier unterschiedlicher Zusammensetzungen in ein Formgebungswerkzeug bzw. in eine Kavität eines Formgebungswerkzeugs eingefüllt werden. Weitere derartige Verfahren sind beispielsweise in DE-B-10 2009 005 859, DE-A-10 2010 015 016, DE-T-60 2004 005 070 und WO-A-2013/036982 bekannt.

Dieser Erfindung liegt die nunmehr Aufgabe zugrunde, die Herstellung eines Rohlings hinsichtlich der Verwendung mehrerer Materialien vielfältiger zu ermöglichen

Diese Aufgabe wird gelöst mit einer Pressenvorrichtung mit den Merkmalen des Anspruchs 1, mit einer Pressenvorrichtung mit den Merkmalen des Anspruchs 3, mit einem Verfahren mit den Merkmalen des Anspruchs 6 mit einem Verfahren mit den Merkmalen des Anspruchs 11 mit einer Verwendung nach Anspruch 13, mit einem Rohling mit den Merkmalen des Anspruchs 14 und mit einer Zuführvorrichtung mit den Merkmalen des Anspruchs 17. Vorteilhafte Merkmale, Ausgestaltungen und Weiterbildungen gehen aus der nachfolgenden Beschreibung, den Figuren wie auch aus den Ansprüchen hervor, wobei einzelne Merkmale aus einer Ausgestaltung nicht auf diese beschränkt sind. Vielmehr sind ein oder mehrere Merkmale aus einer Ausgestaltung mit einem oder mehreren Merkmalen einer anderen Ausgestaltung zu weiteren Ausgestaltungen verknüpfbar. Insbesondere sind die jeweiligen unabhängigen Ansprüche auch jeweils miteinander kombinierbar. Auch sollen die Formulierungen der unabhängigen Ansprüche nicht als Einschränkung des zu beanspruchenden Gegenstands dienen. Ein oder mehrere Merkmale der Anspruchsformulierungen können daher ausgetauscht wie auch weggelassen werden, ebenso aber auch zusätzlich ergänzt werden. Auch können die anhand eines speziellen Ausführungsbeispiels angeführten Merkmale auch verallgemeinert beziehungsweise bei anderen Ausführungsbeispielen, insbesondere Anwendungen ebenfalls eingesetzt werden.

Es wird eine Pressenvorrichtung vorgeschlagen, vorzugsweise eine Pulverpresse, umfassend eine zu befüllende Kavität, zumindest eine erste Materialzuführung eines ersten Materials und eine zweite Materialzuführung eines zweiten Materials, wobei die erste und die zweite Materialzuführung getrennt voneinander angeordnet sind, mit einer Zuführvorrichtung zum Zuführen der zumindest zwei Materialien in die Kavität, wobei die Zuführvorrichtung einen Mündungsquerschnitt mit zumindest einem ersten Bereich des Mündungsquerschnitts für das erste Material und mit einem davon getrennt angeordneten zweiten Bereich des Mündungsquerschnitts für das zweite Material aufweist zum vorzugsweise parallelen, örtlich getrennten Befüllen der Kavität.

Gemäß einer Ausgestaltung der Erfindung ist vorgesehen, dass die Kavität Bestandteil zum Beispiel einer Presse ist. Es besteht aber auch die Möglichkeit, dass die Kavität zwar zur Vorrichtung zugehörig ist, diese aber getrennt von zum Beispiel einer Presse vorliegt. So kann beispielsweise ein Befüllen der Kavität an einem anderen Ort stattfinden als ein nachfolgendes Komprimieren des in der Kavität befindlichen Materials.

Des Weiteren wird eine Pressenvorrichtung mit einer Vorrichtung zur Befüllung eines Formwerkzeugs der Pressenvorrichtung mit mindestens zwei verschiedenen Materialien vorgeschlagen, mit
- einer mit den mindestens zwei Materialien zu befüllenden Kavität und
- einer Befülleinrichtung zum Auslassen der mindestens zwei Materialien zwecks Einbringung dieser Materialien in unterschiedliche Bereiche der Kavität,
- wobei die Befülleinrichtung mindestens zwei getrennte Kammern oder mindestens zwei Kammerbereiche einer gemeinsamen Kammer zur gleichzeitigen Zuführung der mindestens zwei Materialien, direkt aneinander angrenzend oder örtlich getrennt voneinander, zur Einbringung derselben in die Kavität als zumindest teilweise voneinander unterscheidbare Schichten aufweist, und
- mit einer relativen Rotationsbewegung zwischen der Befülleinrichtung und der Kavität, vorzugsweise um eine gemeinsame Achse (nachfolgend auch Maschinenachse genannt), vorzugsweise um eine gemeinsame Mittenachse, während eines Befüllvorgangs. Bevorzugt sind die Befülleinrichtung und die Kavität relativ zueinander drehbar angeordnet, wobei die Befülleinrichtung innerhalb der Kavität, am Rand der Kavität oder oberhalb der Kavität angeordnet sein kann.

Die Kavität ist bevorzugt zylinderförmig gestaltet. Sie kann aber auch in einer Aufsicht betrachtet, eine längliche Erstreckung aufweisen. Eine Relativbewegung zwischen der Kavität und der Befülleinrichtung ist daher beispielswiese nicht nur auf eine Rotation beschränkt. Vielmehr kann auch eine translatorische Relativbewegung, gleichzeitig wie auch nachfolgend, zu der Rotationsbewegung zwischen der Befülleinrichtung und der Kavität während des Füllvorgangs vorgesehen sein. Vorzugsweise besteht die Möglichkeit, dass eine Überlagerung verschiedener Bewegungen ermöglicht wird, zum Beispiel einer Rotationsbewegung mit einer translatorischen Bewegung. Auch können Kurvenbewegungen erfolgen. Die Vorrichtung weist hierfür ein oder mehrere Antriebe auf, die mittels einer Steuerung bzw. Regelung angetrieben werden. Bevorzugt führt die Befülleinrichtung zumindest eine Rotationsbewegung aus.

Mittels der Vorrichtung können unterschiedliche Materialien für vollkommen unterschiedliche Zwecke zu einem Rohling verarbeitet werden, der diese unterschiedlichen Materialien in unterschiedlichen Bereichen seines Volumens aufweist. Unterschiedliche Materialien im Sinne der Verwendung bei der Erfindung sind Materialien, die sich hinsichtlich ihrer Beschaffenheit, ihrer chemischen Elemente, ihrer Körnung und/oder anderer materialbeschreibender und/oder physikalischer und/oder chemischer Parameter unterscheiden. Insbesondere erlaubt die gleichzeitige Anordnung von Materialien in der Kavität unterschiedliche Geometrien hinsichtlich des Rohlings, verschiedenste Anforderungen hinsichtlich beispielsweise Porosität, Festigkeit, Dehnbarkeit, Korngrößenverteilung, Ausrichtung von Korngrößen und vieles weiteres mehr gezielt in bestimmten Bereichen des Rohlings einsetzen zu können. Vorzugsweise wird je nach Einsatzzweck für den Rohling die Geometrie der Kavität gewählt. So kann beispielweise für einige Anwendungen eine Zylinderform geeignet sein, für andere Anwendungen hingegen eher eine eckige Form. Ein erstes, bevorzugtes Einsatzgebiet der Vorrichtung betrifft die Herstellung von Sinterrohlingen, auch Grünlinge genannt. Die hierfür wie auch für andere Einsatzgebiete verwendbaren Materialien können insbesondere schüttfahige Güter aller Art, beispielsweise metallische Pulver und Granulen, keramische Pulver aber auch Kunststoffe umfassen. Weitere Hilfsmittel wie Bindemittel, Presshilfsmittel wie Öle und Wachse oder Schmiermittel können ebenfalls über diese Vorrichtung verarbeitet werden. Neben einem rieselfähigen bzw. fließfähigen Material können auch andere Gebilde wie Gewebe, Vliese, Fasern, Drähte und ähnliches genutzt und in die Kavität eingebracht werden.

Aus den Grünlingen können anschließend ganz unterschiedliche Produkte hergestellt werden, beispielsweise Bauteile von Motoren und Getriebe wie Zahnräder, Lager, Lagerschalen, Filter, Magnete, Werkzeuge, auch Schneidkeramiken und anderes für die unterschiedlichsten Anwendungsgebiete wie Automobilbau, Haushalts-, Heimwerker- und Büromaschinen und anderes.

Daneben kann mit der Vorrichtung aber auch ein Rohling für ganz andere technische Gebiete hergestellt werden und dementsprechend auch auf andere Materialien zugegriffen werden. So kann zum Beispiel unter Nutzung der Zuführvorrichtung ein Rohling für die chemische Industrie hergestellt werden. Ebenso besteht die Möglichkeit des Einsatzes in der Lebensmittelindustrie.

Bevorzugt ist die Herstellung von Presslingen. Presslinge sind kompaktierte Materialien. Diese haben eine bessere Verbindung durch das miteinander Verpressen. Dadurch kann gemäß einer Ausgestaltung bereits eine ausreichende Endfestigkeit resultieren, zum Beispiel durch Aufprägen eines hohen Drucks, insbesondere wie es bei einem isostatischen Pressen erfolgt. Aber auch stabilisierendes Bindermaterial kann dazu genutzt werden, bereits den kompaktierten Pressling in eine Endform zu bringen.

Ein Vorteil der erfindungsgemäß vorgeschlagenen Vorrichtung ist es, dass mit ihr die Kornverteilung sehr genau eingestellt werden kann. Mittels der Zuführvorrichtung kann der jeweilige Materialzufluß genau gesteuert werden, wobei eine Fixierung des jeweiligen Materials beispielweise über ein Bindemittel und/oder auch mittels eines zwischenzeitlichen Verpresssens erfolgt.

Gemäß einer Ausgestaltung der Erfindung ist vorgesehen, dass der Zufluss, also die Rate (Menge pro Zeiteinheit) an durch die Zuführvorrichtung fließendem Material einstellbar ist. Bevorzugt kann der Querschnitt der Zuleitung um zumindest einen Bereich veränderbar sein. Auch besteht die Möglichkeit, den Massenstrom bei einigen Materialien mit einem höheren oder niedrigeren Druck beeinflussen zu können. Wiederum eine Ausgestaltung sieht vor, dass eine Absaugung vorgesehen ist, d.h. ein Ausströmen des jeweiligen Materials durch Aufprägen eines Unterdrucks unterstützt wird.

Weiterhin hat es sich als vorteilhaft erwiesen, wenn in der zu befüllenden Kavität eine Entlüftung vorgesehen ist. Die Entlüftung erlaubt es, Luft aus der Kavität herauszuleiten (z. B. abzusaugen), insbesondere zu dem Zeitpunkt, zu dem mit dem Befüllen der Kavität mit dem ersten und dem zweiten Material begonnen wird. So haben Tests ergeben, dass die Taktzeit des Befüllens unterschiedlichster Kavitäten reduziert werden kann, wenn die in der Kavität enthaltene Luft evakuiert wird. Vorzugsweise wird die Entlüftung mittels eines Unterdrucks ermöglicht. Dazu können ein oder mehr Unterdruckdüsen zumindest benachbart zu der Kavität angeordnet sein. Eine Ausgestaltung der Erfindung sieht vor, dass zumindest eine Düse an der Zuführvorrichtung angeordnet ist, insbesondere unmittelbar benachbart zum Mündungsquerschnitt. Eine weitere Ausgestaltung der Erfindung sieht vor, dass innerhalb des Mündungsquerschnitts ein oder mehrere Düsen angeordnet sind.

Eine weitere Ausgestaltung der Vorrichtung nach der Erfindung erlaubt eine Relativbewegung zwischen der Zuführvorrichtung und der Kavität. Diese Relativbewegung kann entweder durch die Zuführvorrichtung oder nur durch die Kavität ausgeführt werden. Es besteht aber auch die Möglichkeit, dass beide, Kavität wie auch Zuführungsvorrichtung bewegbar sind, vorzugsweise durch einen jeweiligen Antrieb. Es besteht aber ebenfalls die Möglichkeit einer gekoppelten Bewegung, beispielweise mittels eines Getriebes. Eine Bewegung kann translatorisch erfolgen, sie kann aber auch eine Rotationsbewegung oder auch eine Schwenkbewegung sowie eine Überlagerung von zwei oder mehr verschiedenen Bewegungen umfassen. Das ermöglicht es, unterschiedlichste 3D-Geometrien von Rohlingen durch entsprechende Bewegung zum Beispiel der Zuführvorrichtung bzw. des Mündungsquerschnitts eine damit in verschiedenen Bereichen jeweils mit unterschiedlichem Material gefüllte Kavität zu schaffen. Vorzugsweise wird der jeweilige Materialstrom vom ersten und vom zweiten Material dabei nicht unterbrochen. Dadurch können sich jeweils Schichten mit unterschiedlichsten Formen einstellen lassen, je nach technischer Anforderung.

Auch besteht durch ein Einbringen von später zu entfernendem Material die Möglichkeit, Kanäle unterschiedlichster Länge und Breite in den Rohling einzubringen. So kann zum Beispiel auch ein Hohlkörper gebildet werden, vorzugsweise ein beliebiger 3D-Hohlkörper. Eine Ausgestaltung sieht zum Beispiel einen Rohling mit einer Hohlspirale vor.

Weiterhin hat sich herausgestellt, dass der Materialfluss besonders konstant gehalten werden kann, wenn zumindest ein Teil der Vorrichtung vibriert und mittels Vibration den Materialfluss begünstigt. Durch die Vibrationen wird ein Agglomerieren insbesondere von kleinen Pulverpartikeln verhindert, die ansonsten eine Durchströmung blockieren und sich stattdessen in einer der Zuleitungen festsetzen könnten. Beispielsweise kann der Vibrator direkt an einer Materialzuleitung wie auch an der Zuführvorrichtung angeordnet sein.

Auch hat sich herausgestellt, dass es vorteilhaft ist, das Material vor, während und/oder nach der Befüllung der Kavität auszurichten. Hierfür ist beispielsweise vorgesehen, dass ein Einwirkelement mit Kontaktfläche, vorzugsweise in der Form eines Kamms, einer glatten oder auch konturierten Leiste oder einer Rolle vorgesehen ist, das mittels einer Verfahrvorrichtung soweit verfahrbar ist, dass diese in Kontakt mit dem in die Kavität eingefüllten Material gerät, wobei eine Verfahrvorrichtung das Einwirkelement im Material verfährt. Vorzugsweise kann die Leiste auch eine Sägezahnstruktur aufweisen, die so die Oberfläche bearbeitet, über die sie hinwegstreicht.

Eine weitere Ausgestaltung der Erfindung wiederum sieht vor, dass der kompaktierte Pressling nach der Herstellung als Rohling noch weiteren Bearbeitungsschritten unterliegt. So kann dieser als zum Beispiel Grünling verschiedenen Nachbearbeitungsschritten ausgesetzt sein, so zum Beispiel einem Festphasensintern, einem Flüssigkeitssintern oder auch einem Reaktionssintern.

Eine Weiterbildung sieht vor, dass mit der vorgeschlagenen Zuführvorrichtung spezielle Fertigungen von Werkstücke ermöglicht werden. So kann bei Zahnrädern oder Kupplungsköpern in einem einzigen Bearbeitungsgang z. B. außen ein anderes Material in der Kavität angeordnet werden als innen. Dadurch lässt sich die jeweilige Struktur des Werkstücks einstellen, beispielsweise außen ein anderes Gefüge als innen. Auch kann auf diese Weise zum Beispiel gezielt ein austenitisches Gefüge, ein ferromagnetisches Werkstück oder anderes geschaffen werden. So besteht die Möglichkeit, beispielsweise einen Bereich des Werkstücks sinterhärtbar zu gestalten und einen andern Bereich des gleichen Werkstücks hingegen nicht sinterhärtbar. Beispielsweise kann Derartiges bei Zahnrädern genutzt werden. Dort wird beispielsweise ein Außenbereich sintergehärtet, ein Innenbereich weist jedoch ein anderes Material und eine andere Dichte auf. Daher ist dort im Innenbereich nach dem Sintern eine andere Eigenschaft des Materialverhaltens vorhanden als in einem Außenbereich. So liegt zum Beispiel im Inneren eine gewisse Weichheit des Gefüges vor im Vergleich zu einer Verzahnung am Außenumfang.. Derartiges wird beispielsweise für Komponenten eines variablen Ventiltriebs (VVT-Komponenten) genutzt.

Im Übrigen soll die Erfindung im Folgenden anhand eines weiteren konkreten Beispiels näher beschrieben werden. Dieses Beispiel ist jedoch nur als eine von verschiedenen Ausführungen zu betrachten und soll die Erfindung nicht beschränken sondern diese erläutern. Insbesondere können einzelne Merkmale aus diesem Beispiel bei anderen Ausführungen so wie auch in verallgemeinerter Form ebenso zum Einsatz kommen, insbesondere wenn es um andere Materialien, Funktionen oder auch Anordnungen von Schichten geht.

Beispielsweise kann die Erfindung bei der Herstellung eines Kompaktmaterials eingesetzt werden, ähnlich einem Grünling, und zwar einem Kompaktverbund zur Nutzung in einem Wasserstoffspeicher. Hierbei kann vorgesehen sein, dass das erste Material ein primär wasserstoffspeicherndes Material ist und das zweite Material ein primär wärmeleitendes Material ist, wobei beide Materialien durch den Mündungsquerschnitt der Zuführvorrichtung in die Kavität geführt und in unterschiedlichen Bereichen der Kavität eingebracht werden.

Der Begriff Wasserstoffspeicher beschreibt einen Vorratsbehälter, in dem Wasserstoff gespeichert werden kann. Dabei können konventionelle Methoden zur Speicherung und Lagerung von Wasserstoff verwendet werden, wie z. B. Druckgasspeicherung, d.h. Speicherung in Druckbehältern durch Verdichten mit Kompressoren oder Flüssiggasspeicherung oder Speicherung in verflüssigter Form durch Kühlung und Verdichten. Weitere alternative Formen der Speicherung von Wasserstoff basieren auf Feststoffen oder Flüssigkeiten, beispielsweise Metallhydridspeicher, d. h. auf dem Prinzip der Speicherung als chemische Verbindung zwischen Wasserstoff und einem Metall bzw. einer Legierung, oder auf Adsorptionsspeicherung, d. h. adsorptive Speicherung von Wasserstoff in hochporösen Materialien. Weiterhin sind für Lagerung und Transport von Wasserstoff auch Wasserstoffspeicher möglich, die den Wasserstoff temporär an organische Substanzen binden, wobei flüssige, drucklos speicherbare Verbindungen ( so genannter "chemisch gebundener Wasserstoff") entstehen.

Der Begriff Schichten beschreibt, dass vorzugsweise ein Material, aber auch zwei oder mehr Materialien in einer Lage angeordnet sind und diese sich als Lage von ihrer direkten Umgebung abgrenzen lässt. So können beispielsweise unterschiedliche Materialien nacheinander lose übereinander geschüttet werden, so dass benachbarte Schichten sich unmittelbar berühren. In einer bevorzugten Ausgestaltung kann die Schicht aus hydrierbarem Material (hydrierbare Schicht) unmittelbar benachbart zu einer wärmeleitfähigen Schicht angeordnet sein. Eine solche Anordnung erlaubt es, dass die entstehende / benötigte Wärme bei der Wasserstoffaufnahme und/oder Wasserstoffabgabe von dem hydrierbaren Material direkt an die benachbarte Schicht abgegeben bzw. über"geliefert" werden kann.

Unter zumindest einer der folgenden Funktionen "primäre Wasserstoffspeicherung", "primäre Wärmeleitung", "primäre Dehnungskompensation" und/ oder "primäre Gasdurchführung" ist zu verstehen, dass die jeweilige Schicht zumindest diese als eine Hauptaufgabe in dem zweiten Bereich des Verbundmaterials wahrnimmt. So ist es möglich, dass eine Schicht primär zur Wasserstoffspeicherung genutzt wird, gleichzeitig aber auch in der Lage ist, zumindest eine gewisse Wärmeleitfähigkeit zur Verfügung zu stellen. Dabei ist aber beispielsweise vorgesehen, dass zumindest eine andere Schicht vorhanden ist, die primär eine Wärmeleitung übernimmt, das bedeutet, über die der Großteil der Wärmemenge aus dem verpressten Materialverbund abgeleitet bzw. diesem zugeführt wird. Hierbei kann wiederum die primär gasdurchlässige Schicht genutzt werden, durch die zum Beispiel der Wasserstoff in den Materialverbund hinein geleitet aber auch zum Beispiel heraus geleitet wird. Hierbei kann über das durchströmende Fluid aber auch Wärmeenergie transportiert werden.

Das hydrierbare Material kann den Wasserstoff aufnehmen und bei Bedarf wieder abgeben. In einer bevorzugten Ausführungsform umfasst das Material Partikel, Granulate, Fasern, vorzugsweise geschnittene Fasern, Flakes und/oder sonstige Geometrien. Insbesondere kann das Material auch plattenförmig oder pulverartig ausgebildet sein. Dabei ist es nicht notwendig, dass das Material eine gleichmäßige Ausgestaltung aufweist. Vielmehr kann die Ausgestaltung regelmäßig oder unregelmäßig sein. Partikel im Sinne der vorliegenden Erfindung sind beispielsweise annähernd sphärische Partikel ebenso wie Partikel mit einer unregelmäßigen, eckigen äußeren Gestalt. Die Oberfläche kann glatt sein, es ist jedoch auch möglich, dass die Oberfläche des Materials rau ist und/oder Unebenheiten und/oder Vertiefungen und/oder Erhebungen aufweist. Erfindungsgemäß kann ein Wasserstoffspeicher das Material in nur einer spezifischen 3-dimensionalen Ausgestaltung aufweisen, so dass alle Partikel des Materials die gleiche räumliche Ausdehnung aufweisen. Es ist jedoch auch möglich, dass ein Wasserstoffspeicher das Material in unterschiedlichen Ausgestaltungen/Geometrien umfasst. Durch eine Vielzahl an unterschiedlichen Geometrien oder Ausgestaltungen des Materials kann das Material in einer Vielzahl an unterschiedlichen Wasserstoffspeichern verwendet werden.

Vorzugsweise weist das Material Hohlkörper auf, zum Beispiel Partikel mit ein oder mehreren Aushöhlungen und oder mit einer Hohlform, beispielsweise eine Hohlfaser oder einen Extrusionskörper mit Hohlkanal. Der Begriff Hohlfaser beschreibt eine zylinderförmige Faser, die im Querschnitt einen oder mehrere durchgängige Hohlräume aufweist. Durch die Verwendung einer Hohlfaser, können mehrere Hohlfasern zu einer Hohlfasermembran zusammengefasst werden, wodurch eine Aufnahme und/oder Abgabe des Wasserstoffs aus dem Material auf Grund der hohen Porosität erleichtert werden kann.

Bevorzugt weist das hydrierbare Material eine bimodale Größenverteilung auf. Hierdurch kann eine höhere Schüttdichte und damit eine höhere Dichte des hydrierbaren Materials im Wasserstoffspeicher ermöglicht werden, wodurch die Wasserstoffspeicherkapazität, also die Menge an Wasserstoff, die im Speicher gespeichert werden kann, erhöht wird.

Das hydrierbare Material kann erfindungsgemäß wenigstens ein hydrierbares Metall und/oder wenigstens eine hydrierbare Metalllegierung umfassen, vorzugsweise daraus bestehen.

Als hydrierbare Materialien können auch zum Einsatz kommen:
- Erdalkalimetall- und Alkalimetallalanate,
- Erdalkalimetall- und Alkalimetallborhydride,
- Metal-Organic-Frameworks (MOF's) / Metall-organische Gerüste,
   und/oder
- Clathrate,
sowie natürlich jeweilige Kombinationen aus den jeweiligen Materialien.

Das Material kann erfindungsgemäß auch nichthydrierbare Metalle oder Metalllegierungen umfassen.

Das hydrierbare Material kann erfindungsgemäß ein Niedertemperaturhydrid und/oder ein Hochtemperaturhydrid umfassen. Der Begriff Hydrid bezeichnet dabei das hydrierbare Material, unabhängig davon, ob es in der hydrierten Form oder der nicht-hydrierten Form vorliegt. Niedertemperaturhydride speichern Wasserstoff vorzugsweise in einem Temperaturbereich zwischen -55°C bis 180°C, insbesondere zwischen -20 °C und 150 °C, besonders zwischen 0 °C und 140 °C. Hochtemperaturhydride speichern Wasserstoff vorzugsweise in einen Temperaturbereich ab 280°C und mehr, insbesondere ab 300 °C und mehr. Bei den genannten Temperaturen können die Hydride nicht nur Wasserstoff speichern sondern auch abgegeben, sind also in diesen Temperaturbereichen funktionsfähig.

Werden in diesem Zusammenhang 'Hydride' beschrieben, so ist hierunter das hydrierbare Material in seiner hydrierten Form als auch in seiner nicht-hydrierten Form zu verstehen. Erfindungsgemäß können bei der Herstellung von Wasserstoffspeichern hydrierbare Materialien in ihrer hydrierten oder nicht-hydrierten Form eingesetzt werden.

Bezüglich Hydride und deren Eigenschaften wird auf die Tabellen 1 bis 4 in B. Sakietuna et.al., International Journal of Energy, 32 (2007), S. 1121-1140 verwiesen, deren Inhalt hiermit zur Offenbarung dieser Erfindung gehört.

Die Wasserstoffspeicherung (Hydrierung) kann bei Raumtemperatur erfolgen. Die Hydrierung ist eine exotherme Reaktion. Die entstehende Reaktionswärme kann abgeführt werden. Im Gegensatz hierzu muss für die Dehydrierung Energie in Form von Wärme dem Hydrid zugeführt werden. Die Dehydrierung ist eine endotherme Reaktion.

Beispielsweise kann vorgesehen sein, dass ein Niedertemperaturhydrid mit einem Hochtemperaturhydrid zusammen eingesetzt wird. So kann gemäß einer Ausgestaltung vorgesehen sein, dass beispielweise das Niedertemperaturhydrid und das Hochtemperaturhydrid gemischt in einer Schicht eines zweiten Bereichs vorgesehen sind. Auch können diese jeweils getrennt voneinander in unterschiedlichen Schichten oder Bereichen, insbesondere auch in unterschiedlichen zweiten Bereichen angeordnet sein. So kann zum Beispiel vorgesehen sein, dass zwischen diesen zweiten Bereichen ein erster Bereich angeordnet ist. Eine weitere Ausgestaltung sieht vor, dass ein erster Bereich eine Mischung aus Nieder- und Hochtemperaturhydrid in der Matrix verteilt aufweist. Auch besteht die Möglichkeit, dass verschiedene erste Bereiche entweder ein Niedertemperaturhydrid oder ein Hochtemperaturhydrid aufweisen.

Bevorzugt umfasst das hydrierbare Material ein Metall, ausgewählt aus Magnesium, Titan, Eisen, Nickel, Mangan, Nickel, Lanthan, Zirkonium, Vanadium, Chrom, oder eine Mischung aus zwei oder mehreren aus diesem Metallen. Das hydrierbare Material kann auch eine Metalllegierung aufweisen, die wenigstens eines der genannten Metalle umfasst.

Besonders bevorzugt umfasst das hydrierbare Material (Wasserstoffspeichermaterial) wenigstens eine Metalllegierung, die bei einer Temperaturen von 150 °C oder weniger, insbesondere in einem Temperaturbereich von -20°C bis 140°C, insbesondere von 0°C bis 100 °C in der Lage ist, Wasserstoff zu speichern und wieder abzugeben. Die wenigstens eine Metalllegierung ist dabei vorzugsweise ausgewählt aus einer Legierung des AB₅-Typs, des AB-Typs und/oder des AB₂-Typs. Dabei bezeichnen A und B jeweils voneinander verschiedene Metalle, wobei A und/oder B insbesondere ausgewählt sind aus der Gruppe, welche Magnesium, Titan, Eisen, Nickel, Mangan, Nickel, Lanthan, Zirkonium, Vanadium und Chrom aufweist. Die Indizes stellen das stöchiometrische Verhältnis der Metalle in der jeweiligen Legierung dar. Dabei können die Legierungen erfindungsgemäß mit Fremdatomen dotiert sein. Der Dotierungsgrad kann erfindungsgemäß bis zu 50 Atom-%, insbesondere bis zu 40 Atom-% oder bis zu 35 Atom-%, vorzugsweise bis zu 30 Atom-% oder bis zu 25 Atom-%, besonders bis zu 20 Atom-% oder bis zu 15 Atom-%, bevorzugt bis zu 10 Atom-%oder bis zu 5 Atom-% von A und/oder B betragen. Die Dotierung kann beispielsweise mit Magnesium, Titan, Eisen, Nickel, Mangan, Nickel, Lanthan oder andere Lanthanide, Zirkonium, Vanadium und/oder Chrom erfolgen. Dabei kann die Dotierung mit einem oder mehreren unterschiedlichen Fremdatome erfolgen. Legierungen des AB₅-Typs sind leicht aktivierbar, das heißt die Bedingungen, welche zur Aktivierung notwendig sind, ähneln denen im Betrieb des Wasserstoffspeichers. Sie weisen zudem eine höhere Duktilität auf als Legierungen des AB- oder AB₂-Typs. Legierungen des AB₂ beziehungsweise des AB-Typs weisen hingegen eine höhere mechanische Stabilität und Härte gegenüber Legierungen des AB₅-Typs auf. Beispielhaft können hier FeTi als Legierung des AB-Typs, TiMn₂ als Legierung des AB₂-Typs und LaNi₅ als Legierung des AB₅-Typs genannt werden.

Besonders bevorzugt umfasst das hydrierbare Material (Wasserstoffspeichermaterial) eine Mischung aus wenigstens zwei hydrierbaren Legierungen, wobei wenigstens eine Legierung des AB₅-Typs und die zweite Legierung eine Legierung des AB-Typs und/oder des AB₂-Typs ist. Der Anteil der Legierung des AB₅-Typs beträgt insbesondere 1 Gew.-% bis 50 Gew.-%, insbesondere 2 Gew.-% bis 40 Gew.-%, besonders bevorzugt 5 Gew.-% bis 30 Gew.-% und besonders 5 Gew.-% bis 20 Gew.-% bezogen auf das Gesamtgewicht des hydrierbaren Materials.

Das hydrierbare Material (Wasserstoffspeichermaterial) liegt vorzugsweise in partikulärer Form (Partikel, Teilchen) vor.

Die Teilchen weisen insbesondere eine Teilchengröße x₅₀ von 20 µm bis 700 µm, bevorzugt von 25µm bis 500 µm, besonders von 30µm bis 400 µm, insbesondere von 50 µm bis 300 µm auf. Dabei bedeutet x₅₀, dass 50% der Teilchen eine mittlere Partikelgröße aufweisen, die gleich oder kleiner dem genannten Wert ist. Die Teilchengröße wurde mittels Laserbeugung bestimmt, kann aber beispielsweise auch durch Siebanalyse erfolgen. Die mittlere Partikelgröße ist vorliegend die Gewichtsbasierte Partikelgröße, wobei die Volumenbasierte Partikelgröße vorliegend gleich ist. Angegeben ist hier die Teilchengröße des hydrierbaren Materials bevor es zum ersten Mal einer Hydrierung unterworfen wird. Während der Wasserstoffspeicherung treten Spannungen im Material auf, was dazu führen kann, dass während mehrerer Zyklen eine Verringerung der x₅₀ Teilchengröße erfolgt.

Vorzugsweise ist das hydrierbare Material derart fest eingebunden in der Matrix, dass es sich bei einer Speicherung von Wasserstoff zerkleinert. Bevorzugt werden daher Partikel als hydrierbares Material eingesetzt, welches aufbricht, während die Matrix zumindest zum überwiegenden Teil unzerstört bleibt. Dieses Ergebnis ist überraschend, da davon ausgegangen war, dass die Matrix bei einer Dehnung durch Volumenzuwachs des hydrierbaren Materials während der Speicherung von Wasserstoff eher zum Zerreißen neigen würde, wenn eine hohe Dehnung aufgrund des Volumenzuwaches erfolgt. Es wird momentan davon ausgegangen, dass die auf die Partikel einwirkenden Kräfte von außen durch die Anbindung in der Matrix bei der Volumenzunahme zusammen mit den Spannungen innerhalb der Partikel durch die Volumenzunahme zu einem Aufbrechen führen. Ein Aufbrechen der Partikel konnte bei Einbindung in Polymermaterial in der Matrix besonders deutlich aufgefunden werden. Die Matrix aus Polymermaterial war in der Lage, auch die derart aufgebrochenen Patikel stabil ortsfest positioniert zu halten.

Tests haben im Übrigen ergeben, dass bei Nutzung eines Binders, insbesondere eines Klebebinders in der Matrix zur Fixierung dieser Partikel eine besonders gute ortsfeste Positionierung innerhalb der Matrix ermöglicht wird. Ein Bindergehalt kann vorzugsweise zwischen 2 Vol-% und 3 Vol-% des Matrixvolumens betragen.

Bevorzugt erfolgt eine Änderung einer Partikelgröße aufgrund von Aufbrechen der Partikel durch die Speicherung von Wasserstoff um den Faktor 0,6, mehr bevorzugt um den Faktor 0,4, bezogen auf die x₅₀ Teilchengröße zu Beginn und nach 100 Speichervorgängen.

Des Weiteren kann zum Beispiel als Matrixmaterial eine Carbonmatrix genutzt werden, in die das Niedertemperaturhydrid eingelassen ist. Zum Beispiel geht aus der Dissertation an der Universität Utrecht mit dem Titel "Carbon matrix confined sodium alanate for reversible hydrogen storage" von J. Gao, abrufbar unter http://dspace.library.uu.nl/handle/1874/256764 hervor, wie das zu verwendende hydrierbare Material und die Matrix aufeinander abgestimmt werden können, so dass auch bei niedrigeren Temperaturen der daraus hergestellte Wasserstoffspeicher betrieben werden kann. Der Inhalt dieser Dissertation gehört hiermit durch Bezugnahme zum Inhalt der vorliegenden Anmeldung.

Weiterhin kann zumindest eine Komponente des Verbundmaterials in einem Sinterprozess hergestellt werden bzw. worden sein. Bei einem Sinterprozess werden feinkörnige, keramische oder metallische Stoffe erhitzt, wobei die Temperaturen jedoch unterhalb der Schmelztemperatur der Hauptkomponenten des Stoffes bleiben, so dass die Gestalt des Werkstückes erhalten bleibt. Dabei kommt es in der Regel zu einer Schwindung, weil sich die Partikel des Ausgangsmaterials verdichten und Porenräume aufgefüllt werden. Man unterscheidet grundsätzlich das Festphasensintern und das Flüssigphasensintern, bei dem es auch zu einer Schmelze kommt. Durch die Temperaturbehandlung wird beim Sintern aus einem fein- oder grobkörnigen Grünkörper, der in einem vorangegangenen Prozessschritt, beispielsweise mittels Extrusion oder Pulverpressen geformt wurde, ein festes Werkstück. Das Sintererzeugnis erhält erst durch die Temperaturbehandlung seine endgültigen Eigenschaften, wie Härte, Festigkeit oder Temperaturleitfähigkeit, die im jeweiligen Einsatz erforderlich sind. So kann auf diese Weise beispielweise eine offenporige Matrix geschaffen werden, in die das hydrierbare Material eingelassen ist. Auch besteht die Möglichkeit, auf diese Weise Kanalstrukturen zu schaffen, die beispielsweise gasführend sind und in dem Wasserstoffspeicherelement genutzt werden können.

Eine Weiterbildung der Wasserstoffspeicherelement-Herstellvorrichtung sieht vor, dass die zu befüllende Kavität vorzugsweise rund ist und vorzugsweise ein Einwirkelement mit Kontaktfläche vorgesehen ist, das zumindest auf der Oberfläche des in die Kavität eingefüllten zumindest ersten und/oder zweiten Material verfahrbar und entlang dieser bewegbar ist, besonders bevorzugt in das zumindest erste und/oder zweite Material verfahrbar und innerhalb dieses bzw. dieser bewegbar ist.

Neben einer runden Geometrie kann auch eine Geometrie, insbesondere eine eckige Geometrie der Kavität vorliegen. So besteht die Möglichkeit, dass zum Beispiel die Zuführvorrichtung bewegbar in verschiedene Richtungen ist, sei es in einem kartesischen Koordinatensystem oder einem sonstigen orthogonalen Koordinatensystem wie auch zum Beispiel einem polaren Koordinatensystem. Insbesondere kann die Zuführvorrichtung und/oder die zu befüllende Kavität gesteuert bewegtwerden, so dass eine gewünschte Materialablage erfolgt.

Weiterhin besteht die Möglichkeit, dass die Zuführvorrichtung der Wasserstoffspeicherelement-Herstellvorrichtung einen Mündungsquerschnitt mit zumindest einem ersten Bereich für das erste Material und mit einem davon verschiedenen zweiten Bereich für das zweite Material aufweist, und zwar zum vorzugsweise parallelen, örtlich getrennten Befüllen der Kavität, wobei der erste Bereich vorzugsweise zumindest teilweise, besonders bevorzugt vollständig in den zweiten Bereich eingebettet ist.

Hierdurch lassen sich die unterschiedlichsten Geometrien bei der Ablage der mindestens zwei Materialien, insbesondere beim Befüllen der Kavität herstellen. So können nichtebene wie auch ebene Schichtengeometrien gebildet werden. Wird beispielsweise als ein zuzuführendes Material ein vorher hergestellter Materialmix genutzt, kann auf diese Weise auch eine Matrix in unterschiedlichsten Geometrien gebildet werden. Die Matrix beinhaltet zum Beispiel ein wasserstoffspeicherndes Material, ist ansonsten aber auch wärmeleitend oder vorzugsweise porös.

Eine weitere Ausgestaltung der Wasserstoffspeicherelement-Herstellvorrichtung nach der Erfindung sieht vor, dass die Vorrichtung zumindest einen Antrieb aufweist, mittels dessen zumindest eine gesteuerte Relativbewegung zwischen der zu befüllenden Kavität und der Zuführvorrichtung ermöglicht ist. Durch die Steuerung kann beispielweise eine Bahnkurve vorgegeben werden, entlang derer die Zuführvorrichtung und/oder die Kavität verfahren wird. Beispielweise ist eine computergestützte Steuerung oder Regelung der Bewegung vorgesehen. Diese kann vorzugsweise in eine entsprechende Steuereinheit integrierbar sein, die die Vorrichtung steuert bzw. regelt, insbesondere zum Beispiel auch hinsichtlich des Füllens der Kavitäten.

Eine Weiterbildung der Wasserstoffspeicherelement-Herstellvorrichtung sieht vor, dass die Zuführvorrichtung (bzw. Füller) und/oder die Kavität relativ zueinander drehbar angeordnet ist/sind.

Neben dem Füllen der Kavität (der Matrize einer Presse) mit nur einem einzigen Material, insbesondere einem Pulver, erlaubt nunmehr die vorgeschlagene Wasserstoffspeicherelement-Herstellvorrichtung das gleiche Material in die erste und auch in die zweite Zuleitung zu führen, aber beispielsweise mit verschiedener Körnung. Dadurch kann zum Beispiel ein gezielter Gradient in dem Wasserstoffspeicherelement hergestellt werden. Weiterhin ist es möglich, für eine bessere Verteilung des Materials, insbesondere eines Pulvers, zum Beispiel die Zuführvorrichtung mit ein oder mehreren Abstreifelementen zu versehen. Damit kann zum Beispiel eine Ausrichtung des Materials erfolgen. Insbesondere wird ermöglicht, einen Schichtaufbau durch einen gleichmäßigen Helix-Aufbau zu ersetzen oder aber auch zu ergänzen. Weiterhin besteht ebenfalls die Möglichkeit, den Schichtaufbau in zur Maschinenachse rechtwinkliger Erstreckung ungleichmäßig zu gestalten.

Im Gegensatz zu anderen Verfahren erlaubt die Erfindung somit nicht nur einen schichtweisen Aufbau von aus bevorzugt Pulver bestehenden Schichten, wobei der Schichtaufbau rechtwinklig zur Maschinenachse als konstant angesehen werden kann. Vielmehr können gleichzeitig zumindest zwei oder mehr Schichten erzeugt werden, insbesondere jeweils aus unterschiedlichem Material.

Weiterhin kann vorgesehen sein, dass die zu befüllende Kavität der Wasserstoffspeicherelement-Herstellvorrichtung eine Matrizenkavität und die Zuführvorrichtung ein Füller ist und die Wasserstoffspeicherelement-Herstellvorrichtung eine Presse zum Verdichten des zumindest ersten und des zweiten Materials in der Matrizenkavität umfasst. Vorzugsweise wird die Presse durch einen Unterstempel wie auch einen Oberstempel gebildet.

Eine andere Wasserstoffspeicherelement-Herstellvorrichtung, die aber ebenfalls gemäß des Vorschlags aufgebaut sein kann, ist beispielweise ein 3-D-Drucker. Dieser kann zum Beispiel einen rotierenden Füller mit mehreren Kammern für unterschiedliche Materialien, insbesondere Pulver aufweisen. Auch bei dem 3D-Drucker kann der Gedanke verwirklicht werden, dass ein Materialzuführkonzept vorgesehen ist, bei dem der Füller um die Maschinenlängsachse (d.h. um die Achse, längs derer sich Ober- und/oder Unterstempel verschiebt/verschieben) rotiert. Ein Materialreservoir, vorzugsweise für Pulver, ist hierbei in mindestens zwei Segmente unterteilt, wobei jedes Segment wahlweise mit unterschiedlichem Pulver befüllt werden kann. Die Gestaltung der einzelnen Segmente in Form, Größe und Position ist hierbei nicht festgelegt.

Ein Verfestigen beispielsweise durch Laserstrahl in dafür vorgesehenen Schächten des Füllers kann dem Füllvorgang folgen.

Gemäß einem weiteren Gedanken der Erfindung, der unabhängig wie auch abhängig von dieser vorliegen kann, wird eine Zuführvorrichtung einer Vorrichtung, insbesondere einer Presse, vorzugsweise einer Vorrichtung bzw. Presse, wie schon oben beschrieben, vorgeschlagen, und zwar zum Zuführen von zumindest einem ersten und einem zweiten Material, mit einem Mündungsquerschnitt der Zuführvorrichtung, der zumindest einen ersten Bereich und einen davon abgetrennten zweiten Bereich zum parallelen, getrennten Zuführen des ersten und des zweiten Materials aufweist.

Wie oben soll auch im Folgenden dieser Gedanke anhand des Beispiels eines Wasserstoffspeicherelements näher erläutert werden. Die dabei jedoch dargelegten Einzelheiten sind nicht auf dieses Beispiel beschränkt. Vielmehr können diese allgemein entsprechend des vorgeschlagenen Gedankens zur Zuführvorrichtung angewendet werden.

Eine Zuführvorrichtung zur Verwendung in einer Wasserstoffspeicherelement-Herstellvorrichtung ist ebenfalls mit einem Mündungsquerschnitt mit zumindest einem ersten Bereich für das erste Material und mit einem davon abgetrennten zweiten Bereich für das zweite Material zum vorzugsweise parallelen, örtlich getrennten Befüllen der Kavität versehen, wobei der erste Bereich vorzugsweise zumindest teilweise, besonders bevorzugt vollständig in den zweiten Bereich eingebettet ist.

Beispielweise ist die Zuführvorrichtung derart ausgebildet, dass diese eine Materialzuführung für das erste Material und eine davon getrennte Materialzuführung für das zweite Material aufweist, wobei eine Mischzonenzuführung vorhanden ist, entlang der das erste und das zweite Material mischbar und zuführbar ist. Dadurch kann ein Gradient, vor allem aber auch eine Matrix gebildet werden. Die Mischzonenzuführung ist in der Zufuhrvorrichtung enthalten.

Der bereits oben verwendete Begriff "Matrix" beschreibt einen Verbundwerkstoff aus zwei oder mehr untereinander verbundenen Materialien. Hierbei nimmt bevorzugt ein Material ein anderes auf. Die Matrix kann offenporig wie auch geschlossen porig sein. Bevorzugt ist die Matrix porös. Durch die Aufnahme des einen Materials durch das andere Material können sich beispielsweise Werkstoffeigenschaften ergänzen, die ansonsten jeweils nur die einzelne Komponente aufweist. Für die Eigenschaften der Verbundwerkstoffe sind stoffliche Eigenschaften und Geometrie der Komponenten von Bedeutung. Insbesondere spielen oft Größeneffekte eine Rolle. Die Verbindung erfolgt zum Beispiel durch Stoff- oder Formschluss oder eine Kombination von beidem. Auf diese Weise kann in der Matrix zum Beispiel eine feste Positionierung des hydrierbaren Materials ermöglicht werden. Weitere Komponenten der Matrix können beispielsweise Materialien für die Wärmeleitung und/oder die Gasdurchführung sein.

Neben dem wenigstens einen Polymer kann die Matrix eine oder mehrere weitere Komponenten wie beispielsweise Materialien für die Wärmeleitung und/oder die Gasdurchführung, aufweisen.

Die Matrix kann erfindungsgemäß ein oder mehrere Polymere umfassen und wird daher als polymere Matrix bezeichnet. Die Matrix kann daher ein Polymer oder Mischungen von zwei oder mehr Polymeren umfassen. Bevorzugt umfasst die Matrix nur ein Polymer. Insbesondere kann die Matrix selbst wasserstoffspeichernd sein. So kann zum Beispiel Ethylen (Polyethylen, PE) eingesetzt werden. Bevorzugt wird eine Titan-Ethylen-Verbindung genutzt. Diese kann gemäß einer bevorzugten Ausgestaltung bis zu 14 Gew.-% Wasserstoff speichern.

Der Begriff Polymer beschreibt eine chemische Verbindung aus Ketten- oder verzweigten Molekülen, sogenannte Makromoleküle, die wiederum aus gleichen oder gleichartigen Einheiten, den sogenannten konstitutionellen Repetiereinheiten oder Wiederholeinheiten, bestehen. Synthetische Polymere sind in der Regel Kunststoffe.

Durch die Verwendung mindestens eines Polymers können durch die Matrix dem Material gute optische, mechanische, thermische und/oder chemische Eigenschaften zugewiesen werden. Beispielsweise kann der Wasserstoffspeicher durch das Polymer eine gute Temperaturbeständigkeit, eine Resistenz gegenüber das umgebende Medium (Oxidationsbeständigkeit, Korrosionsbeständigkeit), eine gute Leitfähigkeit, eine gute Wasserstoffaufnahme- und - speicherfähigkeit oder andere Eigenschaften, wie beispielsweise eine mechanische Festigkeit aufweisen, welche sonst ohne das Polymer nicht möglich wären. Es können auch Polymere zum Einsatz kommen, die zum Beispiel keine Speicherung von Wasserstoff aber dafür eine hohe Dehnung ermöglichen, wie beispielsweise Polyamid oder Polyvinylacetate.

Erfindungsgemäß kann das Polymer ein Homopolymer oder ein Copolymer sein. Copolymere sind Polymere, die aus zwei oder mehr verschiedenartigen Monomereinheiten zusammengesetzt sind. Copolymere, die aus drei verschiedenen Monomeren bestehen, nennt man Terpolymere. Erfindungsgemäß kann das Polymer beispielsweise auch ein Terpolymer umfassen.

Bevorzugt weist das Polymer (Homopolymer) eine Monomereinheit auf, die vorzugsweise neben Kohlenstoff und Wasserstoff weiterhin wenigstens ein Heteroatom, ausgewählt aus Schwefel, Sauerstoff, Stickstoff und Phosphor aufweist, so dass das erhaltene Polymer im Gegensatz beispielsweise zu Polyethylen nicht vollständig unpolar ist. Auch kann wenigstens ein Halogenatom, ausgewählt aus Chlor, Brom, Flour, Jod und Astat, vorhanden sein. Bevorzugt ist das Polymer ein Copolymer und/oder ein Terpolymer, in welchem wenigstens eine Monomereinheit neben Kohlenstoff und Wasserstoff weiterhin wenigstens ein Heteroatom, ausgewählt aus Schwefel, Sauerstoff, Stickstoff und Phosphor aufweist und/oder wenigstens ein Halogenatom, ausgewählt aus Chlor, Brom, Flour, Jod und Astat, vorhanden ist. Dabei ist es möglich, dass auch zwei oder mehr Monomereinheiten ein entsprechendes Heteroatom und/oder Halogenatom aufweisen.

Das Polymer weist bevorzugt hinsichtlich des Wasserstoffspeichermaterials adhäsive Eigenschaften auf. Dies bedeutet, dass es am Wasserstoffspeichermaterial selbst gut haftet und damit eine Matrix ausbildet, die auch unter Belastungen, wie sie während der Wasserstoffspeicherung auftreten, stabil am Wasserstoffspeichermaterial haften.

Die adhäsiven Eigenschaften des Polymers ermöglichen ein stabiles Einbringen des Materials in einen Wasserstoffspeicher und das Positionieren des Materials an einer definierten Stelle im Wasserstoffspeicher über einen möglichst langen Zeitraum, also über mehrere Zyklen der Wasserstoffspeicherung und Wasserstoffabgabe hinweg. Ein Zyklus beschreibt dabei den Vorgang einer einmaligen Hydrierung und anschließenden Dehydrierung. Dabei sollte das Wasserstoffspeichermaterial bevorzugt über wenigstens 500 Zyklen, insbesondere über wenigstens 1000 Zyklen stabil sein, um das Material wirtschaftlich einsetzen zu können. Stabil im Sinne der vorliegenden Erfindung bedeutet, dass die Menge an Wasserstoff, die gespeichert werden kann, und die Geschwindigkeit, mit der der Wasserstoff gespeichert wird, auch nach 500 beziehungsweise 1000 Zyklen im Wesentlichen den Werten zu Beginn des Einsatzes des Wasserstoffspeichers entspricht. Insbesondere bedeutet stabil, dass das hydrierbare Material zumindest in etwa an der Position innerhalb des Wasserstoffspeichers gehalten wird, an der es ursprünglich in den Speicher eingebracht wurde. Stabil ist insbesondere dahingehend zu verstehen, dass es keine Entmischungseffekte während der Zyklen auftreten, bei denen feinere Partikel sich von gröberen Partikeln abtrennen und entfernen.

Das Wasserstoffspeichermaterial der vorliegenden Erfindung ist insbesondere ein Niedertemperaturwasserstoffspeichermaterial. Bei der Wasserstoffspeicherung, welche ein exothermer Prozess ist, treten daher Temperaturen von bis zu 150 °C auf. Ein Polymer, welches zur Matrix eines entsprechenden Wasserstoffspeichermaterials eingesetzt wird, muss bei diesen Temperaturen stabil sein. Ein bevorzugtes Polymer zersetzt sich daher nicht bis zu einer Temperatur von 180 °C, insbesondere bis zu einer Temperatur von 165 °C, insbesondere von bis zu 145 °C.

Insbesondere ist das Polymer ein Polymer, welches einen Schmelzpunkt von 100 °C oder mehr, insbesondere von 105 °C oder mehr, aber weniger als 150 °C, insbesondere von weniger als 140 °C, besonders von 135°C oder weniger aufweist. Bevorzugt beträgt die Dichte des Polymers, bestimmt gemäß ISO 1183 bei 20 °C, 0,7 g/cm³ oder mehr, insbesondere 0,8 g/cm³ oder mehr, bevorzugt 0,9 g/cm³ oder mehr jedoch maximal 1,3 g/cm³, bevorzugt nicht mehr als 1,25 g/cm³, insbesondere 1,20 g/cm³ oder weniger. Die Zugfestigkeit nach ISO 527 liegt vorzugsweise im Bereich von 10 MPa bis 100 MPa, insbesondere im Bereich von 15 MPa bis 90 MPa, besonders bevorzugt im Bereich von 15 MPa bis 80 MPa. Das Zug-E-Modul nach ISO 527 liegt bevorzugt im Bereich von 50 MPa bis 5000 MPa, insbesondere im Beriech von 55 MPa bis 4500 MPa, besonders bevorzugt im Bereich von 60 MPa bis 4000 MPa. Überraschenderweise hat sich gezeigt, dass Polymere mit diesen mechanischen Eigenschaften besonders stabil und gut zu verarbeiten sind. Insbesondere ermöglichen sie einen stabilen Zusammenhalt zwischen der Matrix und dem darin eingebetteten hydrierbaren Material, so dass das hydrierbare Material über mehrere Zyklen hinweg lange an der gleichen Position innerhalb des Wasserstoffspeichers bleibt. Hierdurch wird eine lange Lebensdauer des Wasserstoffspeichers ermöglicht.

Besonders bevorzugt im Sinne der vorliegenden Erfindung ist das Polymer ausgewählt aus EVA, PMMA, EEAMA sowie Mischungen dieser Polymere.

Mit EVA (Ethylvinylacetat) wird eine Gruppe von Copolymeren aus Ethylen und Vinylacetat bezeichnet, welche einen Anteil von Vinylacetat im Bereich von 2 Gew.-% bis 50 Gew.-% aufweisen. Geringere Anteile an Vinylacetat führen zur Ausbildung von harten Filmen, während höhere Anteile zu einer größeren Adhäsivität des Polymers führen. Typische EVA sind bei Raumtemperatur fest und weisen eine Zugdehnung von bis zu 750% auf. Zudem sind EVA spannungsrissbeständig. EVA weist die folgende allgemeine Formel (I) auf:

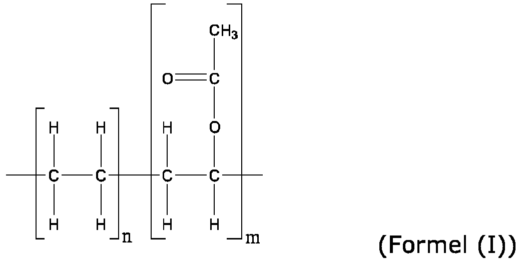

EVA im Sinne der vorliegenden Erfindung weist bevorzugt eine Dichte von 0,9 g/cm³ bis 1,0 g/cm³ (nach ISO 1183) auf. Die Streckspannung nach ISO 527 liegt insbesondere bei 4 bis 12 MPa, bevorzugt im Bereich von 5 MPa bis 10 MPa, besonders von 5 bis 8 MPa. Insbesondere geeignet sind solche EVA, welche eine Zugfestigkeit (nach ISO 527) von mehr als 12 MPa, insbesondere mehr als 15 MPa, und weniger als 50 MPa, insbesondere weniger als 40 MPa, besonders von 25 MPa oder weniger aufweisen. Die Reißdehnung (nach ISO 527) liegt insbesondere bei >30% oder >35%, besonders bei >40% oder 45%, bevorzugt bei >50%. Dabei liegt der Zug-E-Modul bevorzugt im Bereich von 35 MPa bis 120 MPA, besonders von 40 MPa bis 100 MPa, bevorzugt von 45 MPa bis 90 MPa, insbesondere von 50 MPa bis 80 MPa. Geeignete EVA werden beispielsweise von der Firma Axalta Coating Systems LLC unter dem Handelsnamen Coathylene^{®} CB 3547 vertrieben.

Polymethylmethacrylat (PMMA) ist ein synthetischer, transparenter, thermoplastischer Kunststoff mit der folgenden allgemeinen Struktuformel (II):

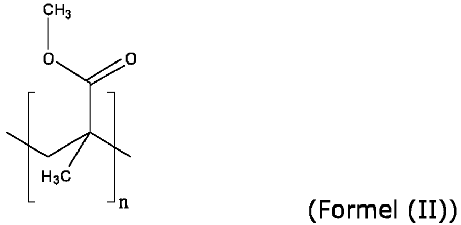

Die Glasübergangstemperatur liegt abhängig von der Molmasse bei etwa 45 °C bis 130°C. Die Erweichungstemperatur beträgt bevorzugt 80 °C bis 120 °C, insbesondere 90 °C bis 110 °C. Das thermoplastische Copolymer zeichnet sich durch seine Beständigkeit gegenüber Witterung, Licht und UV-Strahlung aus.

PMMA im Sinne der vorliegenden Erfindung weist bevorzugt eine Dichte von 0,9 bis 1,5 g/cm³ (nach ISO 1183), insbesondere von 1,0 g/cm³ bis 1,25 g/cm³ auf. Insbesondere geeignet sind solche PMMA, welche eine Zugfestigkeit (nach ISO 527) von mehr als 30 MPa, bevorzugt von mehr als 40 MPa, insbesondere mehr als 50 MPa, und weniger als 90 MPa, insbesondere weniger als 85 MPa, besonders von 80 MPa oder weniger aufweisen. Die Reißdehnung (nach ISO 527) liegt insbesondere bei <10%, besonders bei <8%, bevorzugt bei <5%. Dabei liegt der Zug-E-Modul bevorzugt im Bereich von 900 MPa bis 5000 MPa, bevorzugt von 1200 bis 4500 MPa, insbesondere von 2000 MPa bis 4000 MPa. Geeignete PMMA werden beispielsweise von der Firma Ter Hell Plastics GmbH, Bochum, Deutschland, unter dem Handelsnamen 7M Plexiglas^{®} Granulat angeboten.

EEAMA ist ein Terpolymer aus Ethylen-, Acrylester- und Maleinsäureanhydrid-Monomereinheiten. EEAMA weist einen Schmelzpunkt von etwa 102°C auf, in Abhängigkeit von der Molmasse. Bevorzugt weist es eine relative Dichte bei 20 °C (DIN 53217/ISO 2811) von 1,0 g/cm³ oder weniger und 0,85 g/cm³ oder mehr auf. Geeignete EEAMA werden beispielsweise unter dem Handelsnamen Coathylene^{®} TB3580 von der Firma Axalta Coating Systems LLC vertrieben.

Bevorzugt umfasst das Verbundmaterial im Wesentlichen das Wasserstoffspeichermaterial sowie die Matrix. Der Gewichtsanteil der Matrix bezogen auf das Gesamtgewicht des Verbundmaterials beträgt bevorzugt 10 Gew.-% oder weniger, insbesondere 8 Gew.-% oder weniger, besonders bevorzugt 5 Gew.-% oder weniger und beträgt vorzugsweise wenigstens 1 Gew.-% und insbesondere wenigstens 2 Gew.-% bis 3 Gew.-%. Es ist wünschenswert, den Gewichtsanteil an der Matrix möglichst gering zu halten. Auch wenn die Matrix in der Lage ist, Wasserstoff zu speichern, so ist die Wasserstoffspeicherfähigkeit dennoch nicht so ausgeprägt wie die des Wasserstoffspeichermaterials selbst.

Die Matrix ist jedoch notwendig, um einerseits eine gegebenenfalls auftretende Oxidation des Wasserstoffspeichermaterials gering zu halten oder vollständig zu vermeiden und einen Zusammenhalt zwischen den Partikeln des Materials zu gewährleisten.

Es ist bevorzugt, dass die Matrix ein Polymer mit einer geringen Kristallinität ist. Durch die Kristallinität des Polymers können sich die Eigenschaften eines Materials erheblich verändern. Die Eigenschaften eines teilkristallinen Werkstoffes werden sowohl von den kristallinen als auch von den amorphen Bereichen des Polymers bestimmt. Dadurch ist ein gewisser Zusammenhang mit Kompositmaterialien zu sehen, die ebenfalls aus mehreren Substanzen aufgebaut sind. Beispielsweise nimmt bei Zunahme der Dichte die Dehnungsfähigkeit der Matrix ab.

Die Matrix kann auch in Form von Prepregs vorliegen. Prepreg ist die englische Kurzform für preimpregnated fibres (amerikanisch: preimpregnated fibers), zu Deutsch: "vorimprägnierte Fasern". Prepregs sind mit einem Polymer vorimprägnierte (englisch: pre-impregnated) textile Halbzeuge, die zur Herstellung von Bauteilen unter Temperatur und Druck ausgehärtet werden. Geeignete Polymere sind solche mit einer hochviskosen, jedoch nicht polymerisierten duroplastischen Kunststoffmatrix. Die gemäß der vorliegenden Erfindung bevorzugten Polymere können auch in Form eines Prepregs vorliegen.

Die im Prepreg enthaltenen Fasern können als reine unidirektionale Schicht, als Gewebe oder Gelege vorliegen. Die Prepregs können erfindungsgemäß auch zerkleinert werden und als Flakes oder Schnipsel zusammen mit dem hydrierbaren Material zu einem Verbundwerkstoff verarbeitet werden.

Das Polymer kann erfindungsgemäß entweder in Form einer Flüssigkeit vorliegen, welche mit dem hydrierbaren Material in Kontakt gebracht wird. Flüssigkeit bedeutet dabei, dass entweder das Polymer geschmolzen wird. Erfindungsgemäß ist jedoch auch umfasst, dass das Polymer in einem geeigneten Lösungsmittel gelöst wird, wobei das Lösungsmittel nach Herstellung des Verbundmaterials wieder entfernt wird, zum Beispiel durch Verdunstung. Es ist jedoch auch möglich, dass das Polymer in Form eines Granulats vorliegt, welches mit dem hydrierbaren Material gemischt wird. Durch das Verdichten des Verbundmaterials erweicht das Polymer, so dass es zur Ausbildung der Matrix kommt, in welche das hydrierbare Material eingebettet ist. Wird das Polymer in Form von Teilchen, also als Granulat, eingesetzt, so weisen diese bevorzugt eine x₅₀-Teilchengröße (Volumenbasierte Teilchengröße) im Bereich von 30 µm bis 60 µm, insbesondere von 40µm bis 45 µm auf. Die x₉₀ Teilchengröße liegt insbesondere bei 90 µm oder weniger, bevorzugt bei 80 µm oder weniger.

Des Weiteren besteht die Möglichkeit, die Zuführvorrichtung mit einer zusätzlichen Einheit zur Zuführung von strang-, streifen- oder plattenförmigem Material zu versehen, über die ein Materialstreifen in den Mündungsquerschnitt führbar ist. Damit kann beispielweise ein Gewebe, ein Vlies, ein Film, Laminate aus mehreren Materialien oder ein sonstiges in Streifenform vorliegendes Material mit den anderen mindestens zwei Materialien zugeführt werden, vorzugsweise parallel zum Zuführen des ersten und des zweiten Materials. Ebenfalls können auch Fasern, Drähte oder sonstige einzubettenden Materialien über eine entsprechende Ausgestaltung der Zuführvorrichtung zugeführt und mitabgelegt werden

Gemäß einem weiteren Gedanken der Erfindung wird ein Verfahren zur Herstellung eines Rohlings vorzugsweise mit einer Vorrichtung so, wie oben schon beschrieben, vorgeschlagen und nachfolgend näher erläutert. Es wird zumindest ein erstes Material und ein zweites Material genutzt, wobei eine erste Materialzufuhr des ersten Materials über einen ersten Bereich einer Zuführvorrichtung und eine zur ersten Materialzufuhr parallele zweite Materialzufuhr des zweiten Materials über einen zweiten Bereich der Zuführvorrichtung erfolgt, wobei das parallel und in verschiedenen Bereichen zugeführte zumindest erste und zweite Material in eine Kavität füllt und daraus der Rohling gebildet wird.

Auch dieser Gedanken wird nachfolgend am Beispiel eines Wasserstoffspeicherelements näher erläutert, wobei die jeweiligen Merkmale nicht auf diese Ausgestaltung jeweils beschränkt sind. Vielmehr dient dies nur der Erläuterung, wobei die Merkmale generell mit dem vorgeschlagenen Gedanken verknüpft werden können.

Hinsichtlich des Wasserstoffspeicherelements wird mittels zumindest eines ersten Materials, welches ein wasserstoffspeicherndes Material umfasst, und mittels eines zweiten Materials, das wärmeleitend ist, ein Verbundmaterial geformt, wobei eine erste Materialzufuhr des ersten Material über einen ersten Bereich einer Zuführvorrichtung und eine zur ersten Materialzufuhr parallele zweite Materialzufuhr des zweiten Materials über einen zweiten Bereich der Zuführvorrichtung erfolgt.

Die verwendeten Materialien können insbesondere diejenigen sein, die schon oben beschrieben wurden.

Der Begriff Verbundmaterial beschreibt hierbei, dass in dem Wasserstoffspeicherelement verschiedenartige Materialien verwendet werden, um neben hydrierbarem Material auch andere Materialien ggf. mit anderen Funktionalitäten anzuordnen. Das Verbundmaterial wird beispielsweise aus einzelnen Komponenten, wie die Matrix und den einzelnen Schichten ausgebildet. Für die Eigenschaften des Verbundmaterials sind beispielsweise stoffliche Eigenschaften und Geometrien der Komponenten von Bedeutung. Das Verbundmaterial ist bevorzugt kompaktiert.

Eine Weiterbildung des Verfahrens sieht vor, dass zumindest eines der beiden Materialen, vorzugweise das erste und das zweite Material, schüttfähig, rieselfähig und damit fließfähig, vorzugsweise pulverförmig zugeführt werden. Beispielsweise ist vorgesehen, dass die Zuführvorrichtung gedreht wird, das erste und das zweite Material aus der Zuführvorrichtung dabei parallel austreten, und ein Verbundmaterial als Wasserstoffspeicherelement gebildet wird, bei dem die mindestens zwei Materialien nicht schichtwiese übereinander angeordnet sind, sondern ein Material schraubenlinien- bzw. helixförmig oder wellenförmig angeordnet ist. Es ist dabei von Vorteil, dass die helixförmige Geometrie im Verbundmaterial durch das die Helix umgebende Material als Struktur gestützt wird.

Bevorzugt ist, dass das erste und das zweite Material eine poröse Struktur im Wasserstoffspeicherelement bilden, vorzugsweise ein oder mehrere Kanäle im Verbundmaterial mittels ein oder mehrerer Dorne, Freihalter und/oder zu entfernenden Materials hergestellt werden. Insbesondere kann darüber auch ein Verbundmaterial geschaffen werden, das nach Kompaktierung ohne weitere Nachbehandlung direkt in einen Behälter eines Wasserstoffspeichers angeordnet wird.

Eine weitere Ausgestaltung sieht vor, dass das erste und das zweite Material zumindest teilweise örtlich getrennt voneinander angeordnet sind und getrennte Schichten oder allgemein Bereiche des Wasserstoffspeicherelements bilden.

Wiederum eine weitere Ausgestaltung des Verfahrens sieht vor, dass das erste und das zweite Material in eine Kavität gefüllt werden, wobei das erste und das zweite Material in der Kavität verpresst werden, vorzugsweise durch Verfahren eines Ober- und/oder eines Unterstempels in der Kavität. Eine Weiterbildung sieht vor, dass die Kavität durch einen Behälter des Wasserstoffspeichers gebildet wird.

Weiterhin bevorzugt ist es, wenn ein isostatisches Verpressen des Verbundmaterials für das Wasserstoffspeicherelement erfolgt. Durch das Aufprägen von Drücken von oberhalb 500 bar, insbesondere von Drücken in einem Bereich zwischen 1500 und 6000 bar gelingt es, eine besonders enge Verbindung zwischen einem hydrierbaren Material und einem z. B. wärmeleitenden Material zu schaffen.

Eine sonstige Kompaktierung kann im Übrigen unter gleichzeitigem Einfluß von Wärme und/oder von zum Beispiel einem Gas erfolgen. Auch kann zum Beispiel eine Absaugung vorgesehen sein, beispielweise zum Absaugen von Binder, der eventuell in einem ersten und/oder in einem zweiten Bereich des Verbundkörpers angeordnet ist. Der Binder kann beispielweise vollständig wie auch nur teilweise aus dem Verbundmaterial entfernt werden, beispielweise zur Schaffung einer porösen Struktur. So kann beispielsweise in einem der beiden Bereiche ein Binder angeordnet sein und in einem anderen der beiden Bereiche kein Binder. Auch können unterschiedliche Binder Verwendung finden, indem zum Beispiel in dem ersten Bereich ein anderer Binder als in dem zweiten Bereich eingebracht wird.

Gemäß einem weiteren Gedanken der Erfindung wird ein Rohling vorgeschlagen, mit zumindest einem ersten und einem zweiten Material, vorzugsweise entsprechend den Materialien, die oben schon beschrieben wurden. Das erste und das zweite Material sind zumindest in einem Bereich getrennt voneinander angeordnet und bilden z. B. getrennte Schichten. Vorzugsweise können dadurch 3D-geformte Schichten wie eine Helix, eine Schraube, eine Welle oder eine sonstige nichtebene Geometrie zumindest einer Schicht, insbesondere der Schicht des ersten Materials und der Schicht des zweiten Materials in dem Rohling geschaffen werden.

Auch nachfolgend wird der Gedanke wiederum anhand eines Wasserstoffspeicherelements mit einem Verbundmaterial verdeutlicht, wobei die jeweiligen Merkmale aber wieder genereller im Sinne des obigen Gedankens zu verstehen sind und nicht auf das Beispiel beschränkt. So wird zumindest ein erstes und ein zweites Material vorgeschlagen, wobei das erste Material ein wasserstoffspeicherndes Material umfasst und das zweite Material ein wärmeleitendes Material umfasst, wobei das Wasserstoffspeicherelement vorzugsweise mit einer Herstellvorrichtung und/oder einem Verfahren wie oben beschrieben hergestellt ist.

Es hat sich dabei als vorteilhaft erwiesen, wenn sich im Wasserstoffspeicherelement das zweite Material von einem Inneren des Verbundmaterials zu einem Äußeren des Verbundmaterials erstreckt, wobei das erste und das zweite Material zumindest in einem Bereich getrennt voneinander angeordnet sind.

Der Begriff graduell beschreibt, dass die Dichte des hydrierbaren Materials in der Matrix und in den Schichten einen Gradienten aufweist, zum Beispiel so, dass ein Gefälle oder ein Anstieg der Menge und/oder Dichte des hydrierbaren Materials vorhanden ist, beispielsweise in Abhängigkeit des Fluids, welches durch das Wasserstoffspeicherelement strömt. Bevorzugt ist vorgesehen, dass zwischen dem ersten und dem zweiten Material ein Gradient ausgebildet ist, entlang dessen sich ein Übergang von der ersten zu der zweiten Schicht vollzieht.

Auch kann vorgesehen sein, dass das Wasserstoffspeicherelement Komponenten in Form einer Kern-Mantel-Struktur aufweist, bei der der Kern ein erstes Material und der Mantel ein davon verschiedenes zweites Material umfasst, wobei das erste Material und/oder das zweite Material ein wasserstoffspeicherndes Material aufweisen. Dieses liegt zum Beispiel bevorzugt als Schichten des Verbundmaterials vor. Eine Ausgestaltung sieht vor, dass das zweite Material des Mantels ein Polymer aufweist, was zumindest wasserstoffdurchlässig ausgebildet ist. Eine weitere Ausgestaltung sieht vor, dass der Kern ein wärmeleitendes Material und der Mantel ein wasserstoffspeicherndes Material aufweist. Wiederum kann vorgesehen sein, dass der Kern ein primär wasserstoffspeicherndes Material aufweist und der Mantel ein primär wärmeleitendes Material, wobei das wärme-leitende Material wasserstoffdurchlässig ist.

Des Weiteren kann das Verfahren zur Herstellung des Wasserstoffspeicherelements vorsehen, dass getrennte Lagen eines wasserstoffspeichernden Materials und eines wärmeleitenden Materials in ein Presswerkzeug gefüllt werden und diese zur Erzeugung einer Sandwichstruktur miteinander verpresst werden, wobei das wärmeleitende Material bei Einsatz der Sandwichstruktur zur Wasserstoffspeicherung eine Wärmeleitung bevorzugt in Richtung der Lagenerstreckung übernimmt. Zwischen die getrennten Lagen und/oder benachbart dazu können beispielsweise ein oder mehrere Matrixen angeordnet werden, so dass das Verbundmaterial dadurch erste und zweite Bereiche erhält.

Beispielwiese kann vorgesehen sein, dass ein Metallpulver und/oder normaler natürlicher Graphit als wärmeleitendes Material genutzt werden, wobei bei einer Nutzung des normalen natürlichen, linsenförmigen Graphits oder beispielsweise Flakes aus expandiertem Graphit beim Füllen vorzugsweise horizontal ausgerichtet werden, so dass eine Wärmeleitung in Richtung einer ausgerichteten hexagonalen Gitterstruktur in der Sandwichstruktur genutzt werden kann.

Weiterhin kann vorgesehen sein, dass alternativ oder zusätzlich ein oder mehrere Lagen aus Folien eines gewalzten expandierten Graphits, aus Flocken aus einem gewalzten expandierten Graphit und/oder ein Graphitgewebe als wärmeleitendes Material in die Sandwichstruktur eingebracht werden.

Bevorzugt ist des Weiteren, dass das Verbundmaterial des Wasserstoffspeicherelements porös ist. Dadurch kann eine Wasserstoffgasführung erleichtert werden.

Insbesondere ist vorgesehen, dass ein drittes Material vorgesehen ist, welches eine funktionale Lage im Wasserstoffspeicherelement bildet, insbesondere eine poröse, gasdurchlässige Lage.

In einer bevorzugten Ausführungsform weisen eine Matrix und zumindest eine Schicht jeweils Kohlenstoff auf. Auf diese Weise kann die Wärmeleitfähigkeit des Wasserstoffspeicherelements verbessert werden. Es kann dadurch die entstehende Wärme bei der Aufnahme und/oder Abgabe des Wasserstoffs besser abgeleitet bzw. zugeführt werden.

Es ist bevorzugt, dass die Matrix und/oder eine Schicht eine Mischung aus verschiedenen Kohlenstoffarten aufweist, umfassend beispielweise expandierten natürlichen Graphit als eine der Kohlenstoffarten. Bevorzugt wird nichtexpandierter Graphit zusammen mit expandiertem natürlichen Graphit verwendet, wobei gewichtsbezogen mehr nichtexpandierter Graphit als expandierter Graphit eingesetzt wird. Insbesondere kann die Matrix expandierten natürlichen Graphit aufweisen, in dem zum Beispiel ein hydrierbares Material angeordnet wird.

Vorzugsweise weist das Verbundmaterial eine elastische Eigenschaft in zumindest einem Bereich aufweist. Auf diese Weise kann sichergestellt werden, dass sich das hydrierbare Material beispielsweise bei der Aufnahme von Wasserstoff ausdehnen kann, ohne dabei das Verbundmaterial zu beschädigen oder übermäßig zu strapazieren.

Im Folgenden wird ein näher auf verschiedene weitere Ausführungen des erfinderischen Gedankens Bezug genommen.

Neben der Möglichkeit, dass die Zuführvorrichtung, auch Befülleinrichtung oder Füller genannt, in der Maschinenlängsachse rotieren kann, kann beispielweise vorgesehen sein, den Füller zum Füllen der Matrizenkavität über dieser zu positionieren, wobei die Oberseite des Unterstempels mit der Oberseite der Matrize abschließt. Während der Unterstempel in die untere Position bewegt wird, dreht sich der Füller bei Abgabe der Materialien um die Maschinenlängsachse. Durch mehrere Kammern bzw. Materialzuführschächte an der Auslassöffnung des Füllers, die mit unterschiedlichen Pulvern gefüllt sind, entsteht somit ein charakteristischer Helix-Aufbau. Die Schichtdicken können durch die Gestaltung der Kammern, die Drehgeschwindigkeit sowie die Geschwindigkeit des Unterstempels gesteuert werden. Der Anteil der einzelnen Schichten rechtwinklig zur Maschinenlängsachse wird jedoch im Wesentlichen durch den Aufbau und die Aufteilung der Kammern festgelegt. Neben den Einbauten zur Aufteilung des Füllers in verschiedene Kammern können weiterhin unterschiedliche Einbauten in den Kammern untergebracht sein, die das Fließverhalten des Pulvers oder ähnliche Eigenschaften beeinflussen. Dieses können beispielsweise radiale Speichen oder auch Gitter oder andere Geometrien sein. Der prinzipielle Aufbau eines Presswerkzeuges wird hierbei nicht eingegrenzt.

Mehrere Werkzeugebenen und Dorne können weiterhin eingesetzt werden. Weiterhin ist es möglich, dass zusätzlich zu dem eingebrachten Pulver Einbauten in Form von Lagen von Folien, Fasern oder Geweben, bspw. Kohlefolie, Kohlefasern oder Kohlegewebe, in die Matrizenkavität eingebracht werden. Diese Lagen können sowohl als zusammenhängende Folien oder Gewebe eingebracht werden, wie auch in Form von Flakes oder Häxelgut. Die Lagen können hierbei zusätzlich zu den bestehenden Materialien eingebracht werden, oder diese teilweise oder vollständig ersetzen.

Neben der Verwendung von unterschiedlichen Pulvern oder Pulvern und Zusätzen, in Form von bspw. Häxelgut, ist es ebenfalls möglich, Pulver der gleichen Legierung mit unterschiedlichen Partikelgrößen und/oder unterschiedlicher Partikelform zu verwenden. Zusätze, die dem Pulver zugesetzt werden können, können beispielsweise das Fließverhalten sowie Eigenschaften während des Füllens, während des Verdichtens oder während nachfolgender Prozessschritte beeinflussen. Ebenfalls können die in einer Kammer verwendeten Pulver aus Mischungen unterschiedlicher Pulver bestehen.

Bei der Verwendung von Flakes oder Häxelgut können diese durch die zuvor angesprochenen Einbauten entsprechend der gewünschten Eigenschaften des Presslings ausgerichtet werden. So sieht eine Ausführung vor, Kohlefaserflakes so auszurichten, dass der Wärmefluss im Pressling vorzugsweise senkrecht zur Längsachse erfolgt.

Eine weitere Ausführung des Füllers sieht vor, diesen mit einer Vorrichtung zu versehen, die den Füller in Vibrationen senkrecht zur Maschinenachse versetzt, um so das Fließverhalten des Pulvers bzw. des Häxelgutes oder Schüttgutes zu beeinflussen.

Eine zusätzliche Ausführung der Erfindung sieht einen Aufbau aus drei funktionalen Schichten vor, wobei zum Beispiel eine äußere Schicht der Wärmezufuhr oder Wärmeabfuhr dient, eine mittlere Schicht als Speichermedium dient, und eine innere Schicht der Zufuhr oder Abfuhr des zu speichernden Mediums dient. Hierbei kann die äußere Schicht zur Wärmeübertragung als Graphitschicht ausgeführt sein, die mittlere Schicht als Metallhydrid zur Speicherung von Wasserstoff sowie die innere Schicht aus einem anderem Material, insbesondere Metalllegierung, vorzugsweise Chrom-Nickel-Pulver, welches der Zufuhr und Abfuhr des Wasserstoffes dient.

Eine weitere Ausführung sieht vor, dass der Füller außerhalb der Matrizen-Füllposition gefüllt wird. Hierbei rotiert der Füller während des Füller-Auffüllvorgangs, wohingegen er während des Befüllens der Matrizenkavität nicht zwangsläufig rotiert. Eine Rotation des Füllers beim Füllen der Matrize kann sinnvoll sein, um beispielsweise Füllunterschiede, die bei Kavitäten zur Herstellung von Bauteilen mit Verzahnungen auftreten können, entgegenzuwirken. Ein saugendes Füllen der Matrize ist nicht zwingend erforderlich, kann jedoch sinnvoll sein, um so unkontrollierbare Vermischungen der einzelnen Pulver zu verhindern. So ist es beispielsweise möglich, den Füller im äußeren Bereich mit einem anderen Pulver als im inneren Bereich zu Füllen, betrachtet unter Bezugnahme auf die Mittelachse bzw. die Rotationsachse des Füllers. Somit ist es beispielsweise möglich, den äußeren Ring des Füllers mit einem Pulver zu füllen, das spezielle Eigenschaften aufweist, beispielsweise zum Härten geeignet ist. Weiterhin ist es möglich, dass der Füller drei oder mehr Kammern aufweist, wobei der innere und der äußere Bereich mit einem Pulver gefüllt ist, in das Presshilfsmittel eingebracht ist, wobei vorzugsweise im mittleren Bereich ein Pulver ohne Presshilfsmittel eingebracht wird. Da das Presshilfsmittel zur Reduzierung der Reibung zwischen Pulver und Werkzeugkomponenten dient, kann im mittleren Bereich auf Presshilfsmittel verzichtet werden. Weiterhin bedeutet der Zusatz von Presshilfsmittel trotz dessen geringer Dichte immer auch eine Verringerung der Teiledichte. Diese Teildichteverringerung kann somit weiter reduziert werden, ohne die Schmierfunktion zwischen Werkzeugkomponenten und Pulver herabzusetzen.

Mit dem beschriebenen Drei- oder auch Mehrkammer-Füller, bestehend aus einem inneren Bereich und mindestens zwei umgebenden Ringbereichen, ist es somit möglich, zum Beispiel auch ein Zahnrad mit einer Innenbohrung zu pressen, bei dem die Matrizenkavität durch den beschrieben Fülleraufbau so gefüllt wird, dass das Presshilfsmittel lediglich im inneren und äußeren Bereich, also im Bereich des Dornes und der Außenverzahnung vorhanden ist. Der Kammeraufbau kann hierbei beliebig komplex sein und ist von den zu pressenden Bauteilen unabhängig. Es ist sogar möglich, unterschiedliche Pulver für beispielsweise Durchbrüche zu verwenden. Hierbei muss lediglich die Stellung beim Überführen des Füllers in die Füllstellung der Matrize ausreichend genau positioniert werden. Über ein unterschiedliches Füllen der Bauteilkavität ist es so möglich, verschiedene Bauteileigenschaften, je nach Anforderung der einzelnen Bauteilbereiche oder Funktionsflächen des Bauteils herzustellen. Beispielsweise ist es möglich, bei einem Zahnrad den Bauteilbereich zwischen Innenverzahnung und Aussenverzahnung mit einem Pulver herzustellen, das auf eine sehr geringe Dichte verdichtet wird, um so die dämpfenden Eigenschaften der porösen Struktur sicherzustellen und weiterhin die für die hohe Belastung der inneren und äußeren Bereiche notwendige hohe Dichte zu gewährleisten. Entsprechend können mit dem vorgeschlagenen Füller auch verschiedenste komplexe Geometrien für das Wasserstoffspeicherelement geschaffen werden.

Beim Verfahren des Füllers in die Füllposition zur Befüllung der Matrize ist es beispielsweise möglich, dass alle unten angeordneten Werkzeugkomponenten an ihren Oberseiten in einer Ebene mit der Matrizenoberseite positioniert sind. Hierdurch ist es möglich, Vermischungen der Pulver beim Verfahren des Füllers über die Matrize entgegenzuwirken.

In einem weiteren Ausführungsbeispiel ist es jedoch auch möglich, dass die Oberseite des Unterstempels nicht mit der Oberseite der Matrize in einer Ebene, sondern unterhalb dieser liegt. Somit ist es möglich, eine Schicht von bevorzugt Pulver auf Unterstempel aufzubringen, wobei es sich hierbei nicht um ein einzelnes Pulver aus einer einzelnen Kammer handeln muss. Es können auch Pulver aus mehreren Kammern als erste Schicht in die Matrizenkavität eingefüllt werden oder andere Materialien, wie oben beschrieben. Beispielsweise kann ein Füller aus drei Kammern aufgebaut sein, wobei eine Kammer mit Graphit, eine mit einem Metallhydrid und eine weitere mit einem Pulver, das zur Gasleitung gedacht ist, gefüllt sein. Liegt die mit Graphit versehene Kammer des Füllers in dem Moment, in dem sich der Füller in Richtung Füllposition der Matrize begibt, der Matrize gegenüber, so ist es durch ein Herunterfahren der unteren Werkzeugkomponente oder der unteren Werkzeugkomponenten vor dem Erreichen des Füllers möglich, den unteren Bereich der Matrizenkavität mit Graphit zu füllen. Befindet sich der Füller über der Matrizenkavität, so kann der Füller dann durch Rotieren beispielweise einen Helixaufbau auf der Graphitschicht in der Kavität erzeugen, der also unten mit einer Graphitschicht beginnt. Ebenso ist es möglich, mit demselben Verfahren oben in der zu verpressenden Materialanordnung in der Kavität eine einheitliche Pulverschicht mit Graphit zu erzeugen, um beziehungsweise eine einheitliche Graphitschicht an der Oberseite und der Unterseite des Presslings herzustellen.

Weiterhin ist es möglich, dass die Rotationsrichtung und die Rotationsgeschwindigkeit während des Füllvorgangs geändert wird, wobei es ebenfalls möglich ist, dass der Füller in einer festgelegten Position stehenbleibt.

Ebenfalls ist es möglich, dass die Position des gesamten Füllers bezogen auf die zu befüllende Kavität während des Füllvorgangs variiert.

Neben der Einbringung der für die spätere Funktion des Presslings beziehungsweise des hieraus entstehenden Fertigprodukts notwendigen Materialien, die über den Füller eingebracht werden können, ist es ebenfalls möglich, dass einzelne Komponenten als Platzhalter in die Kavität eingebracht werden, die in späteren Prozessschritten ersetzt bzw. entfernt werden. Dies kann gegebenenfalls durch einen thermischen oder chemischen Prozess erfolgen.

Ebenfalls ist es denkbar, dass die Form des Bauteils nicht durch das Verpressen aus Pulvern und/oder Häxelgut bzw. Flakes hergestellt wird, sondern durch Extrudieren von unterschiedlichen Extrusionsmedien in eine Form durch Rotieren der selbigen oder durch Rotieren der Einlassgeometrie in eine nicht rotierende Form.

Gemäß einem weiteren Gedanken der Erfindung, der mit einer oder mehreren der oben beschriebenen Varianten zusammen aber auch unabhängig von dieser verwirklicht werden kann, wird eine Presse mit einer mit Material zu befüllenden Kavität und mit einem mittels einer Verfahrvorrichtung der Presse verfahrbaren Kamm vorgeschlagen, wobei die Verfahrvorrichtung den Kamm in das Material und über dieses verfahren kann. Beispielsweise ist vorgesehen, dass eine programmierbare Steuerung der Verfahrvorrichtung vorhanden ist, die einen vorgebbaren Weg in eine Bewegung des Kamms umsetzt. Mittels des Kamms oder auch einer Leiste oder ein oder mehreren Zinken kann einerseits eine Glättung, insbesondere eine Ausrichtung eines Materials zumindest im Bereich einer Oberfläche desselben bewirkt werden. Andererseits kann mittels des Kamms oder anderer Komponenten ein Gradient in die Schichten eingebracht werden.

Vorzugsweise ist der Kamm zumindest zum Teil austauschbar. Dadurch kann die Vorrichtung als solches bleiben. Es wird aber je nach herzustellendem Rohling und/oder zu verwendendem Material ein angepasster Kamm, eine Leiste oder eine Zinke oder ähnliches genutzt. Im Übrigen kann der Kamm eine Mehrzahl an Zinken aufweisen. Vorzugsweise hat der Kamm zumindest eine Zinke, die eine Verbreiterung zum Kontaktieren des Materials aufweist. Dieses erlaubt, mittels beispielsweise unterschiedlicher Verbreiterungen gezielte Gradienten einstellen zu können.

Eine Weiterbildung sieht vor, dass ein Abstand zwischen zwei Zinken des Kammes veränderbar ist. Dies kann beispielsweise während des Betriebs erfolgen, d.h. während des Kontakts der Zinken mit dem Material. Dadurch können beispielweise spiralförmige Muster erzeugt werden wie auch unterschiedliche Gradientenabstände, zum Beispiel angepasst an eine Helix. Weiter bevorzug ist es, wenn zwei oder mehr Kämme parallel verfahrbar sind.

Vorzugsweise sind zumindest zwei Materialien zur Verfüllung der Kavität der Presse vorgesehen, wobei der Kamm soweit verfahrbar ist, dass dieser zumindest in das verfüllte erste Material, bevorzugt in das erste und das zweite Material einfährt. Ist das Material in eine Kavität einer Presse eingebracht, führt der Kamm eine das Material kontaktierende Bewegung aus. Auch ist es möglich, dass der Kamm in das verfüllte Material eintaucht und in der Kavität verfahren wird. Der Kamm kann beispielweise unterschiedlich tief eintauchen. Weiterhin besteht die Möglichkeit, dass der Kamm beim Füllen der Kavität mit erstem und zweitem Material zumindest in eines der beiden ersten und zweiten Materialien eintaucht und verfahren wird. Die Kämme können in die Füllergeometrie integriert sein.

Weitere vorteilhafte Ausgestaltungen wie auch Merkmale gehen aus den nachfolgenden Figuren und der dazugehörigen Beschreibung hervor. Die aus den Figuren und der Beschreibung hervorgehenden einzelnen Merkmale sind nur beispielhaft und nicht auf die jeweilige Ausgestaltung beschränkt. Vielmehr können aus ein oder mehreren Figuren ein oder mehrere Merkmale mit anderen Merkmalen aus anderen Figuren wie auch aus der obigen Beschreibung zu weiteren Ausgestaltungen verbunden werden. Daher sind die Merkmale nicht beschränkend sondern beispielhaft angegeben. Es werden insbesondere einige Ausführungen des Fülleraufbaus dargestellt:
Fign. 1 bis 8
   zeigen jeweils drei Darstellungen, nämlich links eine Draufsicht des Füllers zur Verdeutlichung von dessen Kammer- und insbesondere Kammerauslassöffnungsanordnung und oben rechts eine perspektivische Ansicht auf den Pressling sowie unten rechts einen Schnitt durch den Pressling, der sich mittels des Füllers und einer nicht gezeigten Presse herstellen lässt, wobei zur Verdeutlichung jeweils ein zylindrischer Pressling gewählt und auf die Darstellung von Durchbrüche oder andere Geometriedetails verzichtet ist,
Fign. 9 bis 28
   zeigen prinzipiell den Ablauf beim Befüllen einer Matrizenkavität mit zwei Füllern in verschiedenen Prozessstadien,
Fign. 29 bis 44
   zeigen prinzipiell den Ablauf des Befüllens einer Matrizenkavität mit einem Füller mit zwei Kammern,
Fign. 45 bis 54
   zeigen prinzipiell den Ablauf beim Befüllen einer Matrizenkavität mit einem Rotationsfüller,
Fign. 55 bis 60
   ein weiteres Ausführungsbeispiel eines Rotationsfüllers mit drei Kammern sowie eine Darstellung eines Rohlings, der durch Verpressen von mittels des Rotationsfüllers in eine Matrizenkavität eingebrachten Pulvermaterialien hergestellt ist und

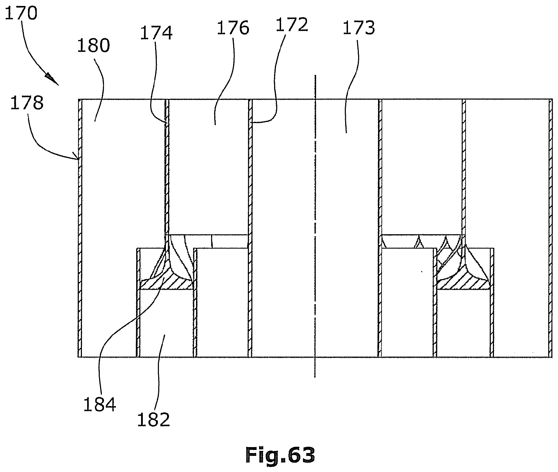

Fign. 61 bis 63
   ein weiteres Ausführungsbeispiel eines Rotationsfüllers.

Fig. 1 zeigt einen Füller 11 mit zwei gleichgroßen Kammern 5, 6 für zwei unterschiedliche Pulver 1, 2, und den entsprechenden Pressling 9.

Fig. 2 zeigt einen Füller 11 mit drei Kammern 5, 6, 7, wobei die flächenmäßige Aufteilung der drei Kammern 5, 6, 7 jeweils unterschiedlich ist, und den entsprechenden Pressling 9.

Fig. 3 zeigt einen Füller auf 11 ähnlich demjenigen der Fig. 2, jedoch mit vier Kammern 5, 6, 7, 8 anstelle von drei Kammern, und dem dazugehörigen Pressling 9.

Fig. 4 zeigt einen möglichen Kammeraufbau eines Füllers 11 für drei Pulver 1, 2, 3, mit dem vier Schichten des ebenfalls gezeigten Presslings 9 erzeugt werden, wobei der Werkstoff im Zentrum des Presslings 9 hierbei homogen ist und eine Helixstruktur an der Außenseite vorhanden ist.

Fig. 5 zeigt einen Füller 11 für drei unterschiedliche Materialien, wobei Material 1 die von den Materialien 2 und 3 gebildete Helix des ebenfalls gezeigten Presslings 9 umschließt.

Fig. 6 zeigt einen Füller 11 und den Pressling 9, der mit Hilfe einer normalen Füllung auf der Ober- und Unterseite sowie mit einer Helixstruktur in der Mitte hergestellt wird, wobei es möglich ist, die im inneren befindlichen Materialien, hier Material 2 und Material 3, vollständig nach außen abzuschotten, hier durch Material 1, Material 4 und Material in der Kammer 5, und wobei der Füller 11 der Herstellung des mittleren Segmentes des Presslings 9 in Form einer Helix dient.

Fig. 7 zeigt ein weiteres Ausführungsbeispiel eines Füllers 11 und das mit diesem herstellbaren Presslings 9.

Fig. 8 zeigt ein nächstes Ausführungsbeispiel eines Füllers 11 und das mit diesem herstellbaren Presslings 9.

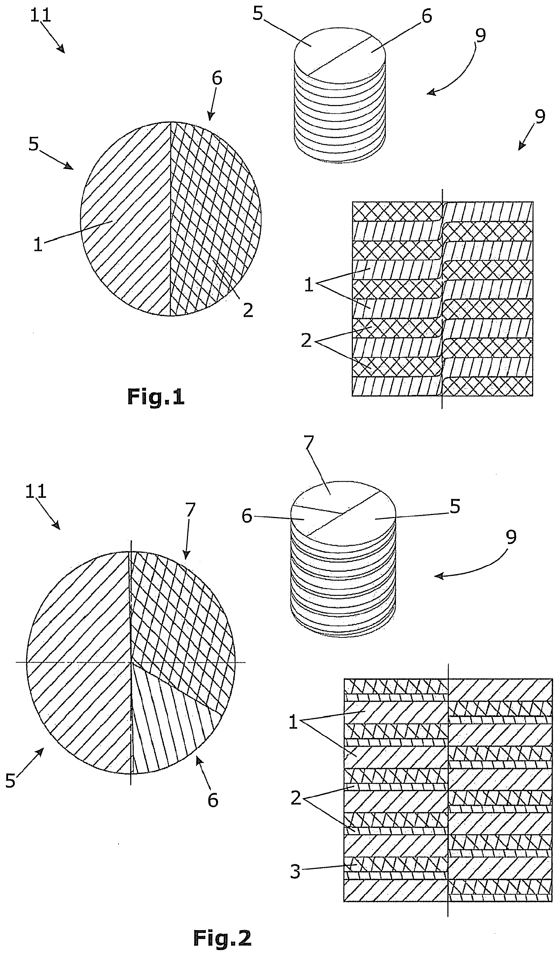

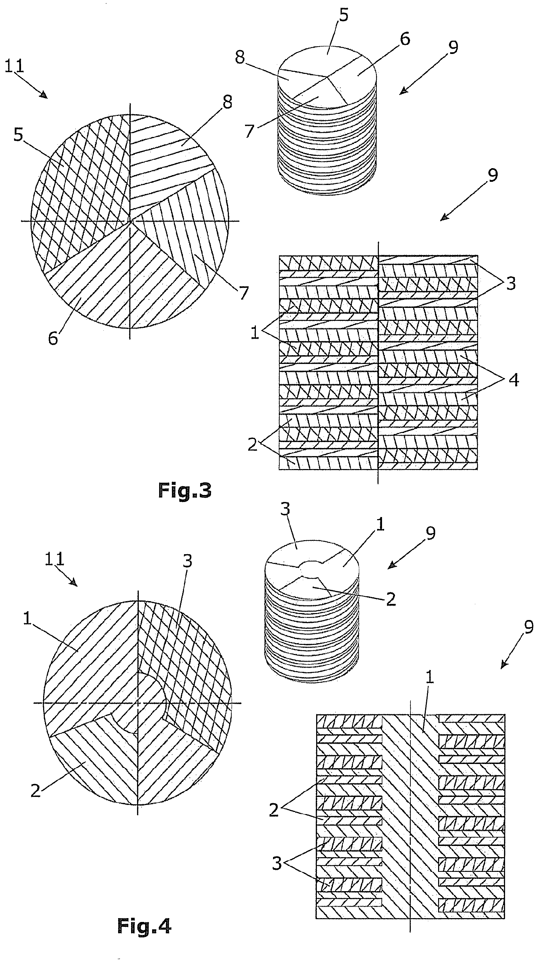

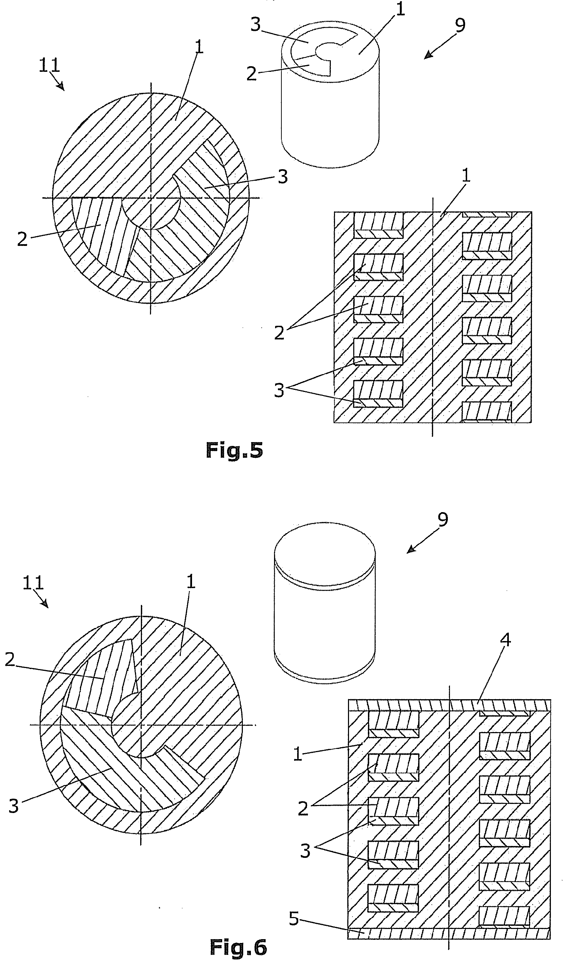

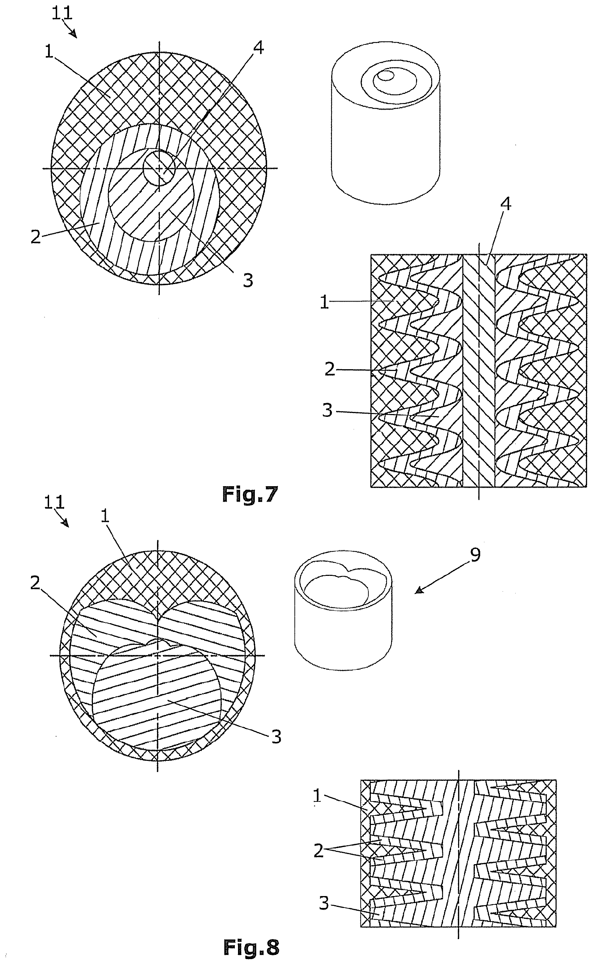

In den Füllerdraufsichten jeweils links in den Fign. 1 bis 8 sind Auslassöffnungsanordnungen für die Füllerkammern gezeigt, die zu einer ineinander verschlungenen helixförmigen Schichtenablage von Pulvermaterial in einer Pressenkavität führen, wenn sich der Füller in seiner Füllposition über der Pressenkavität dreht und sich der Boden der Kavität bei Relativverdrehung vom Füller immer weiter entfernt. Die Auslassöffnungen mindestens zweier Kammern sind in Radial- und Drehrichtung des Füllers betrachtet versetzt zueinander angeordnet, überstreichen also konzentrische Flächenbereiche, die einander überlappen oder von denen der eine innerhalb des anderen angeordnet ist.

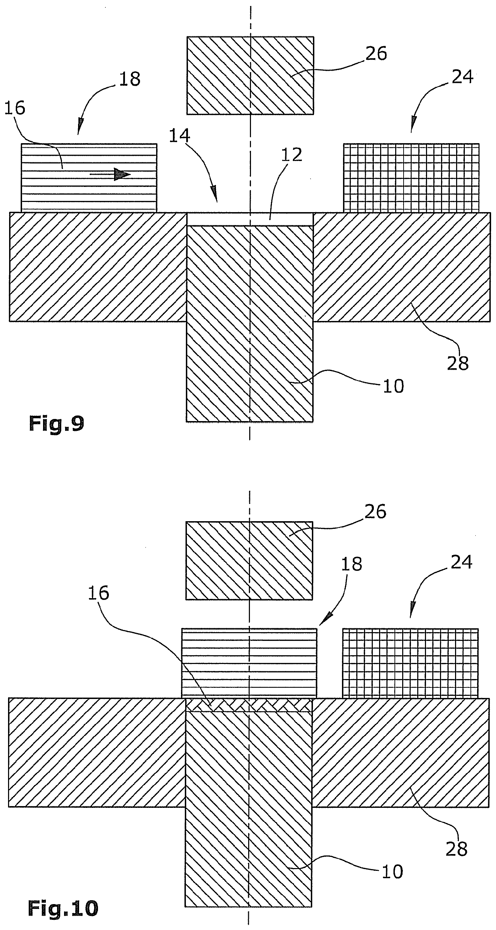

Fig. 9 bis Fig. 28 zeigen den prinzipiellen Ablauf beim Füllen einer Matrizenkavität mit zwei Füllern. Hierbei ist der Füller 18 mit dem Material 1 befüllt, Füller 24 mit Material 2. Das Beispiel zeigt einen 4-lagigen Aufbau, wobei zwei Lagen von Pulver 1 und zwei Lagen von Pulver 2 verpresst werden. Es ist jedoch auch möglich, mehr als zwei Füller einzusetzen. Hierbei kann die Anzahl, die Reihenfolge und die Dicke der Lagen aufgrund der zu erzielenden Eigenschaften frei gestaltet werden. Nachfolgend wir der jeweilige Ablauf in jeder Figur kurz beschreiben.

Fig. 9: Der Unterstempel 10 ist um den jeweiligen Weg nach unten gefahren, der der Höhe des Teilfüllraums 12 (der Kavität 14) für das erste Material 16 entspricht. Der erste Füller 18 bewegt sich über die Kavität 14.

Fig. 10: Das erste (Pulver-)Material 16 fällt durch Schwerkraft in die Matrizenkavität 14.

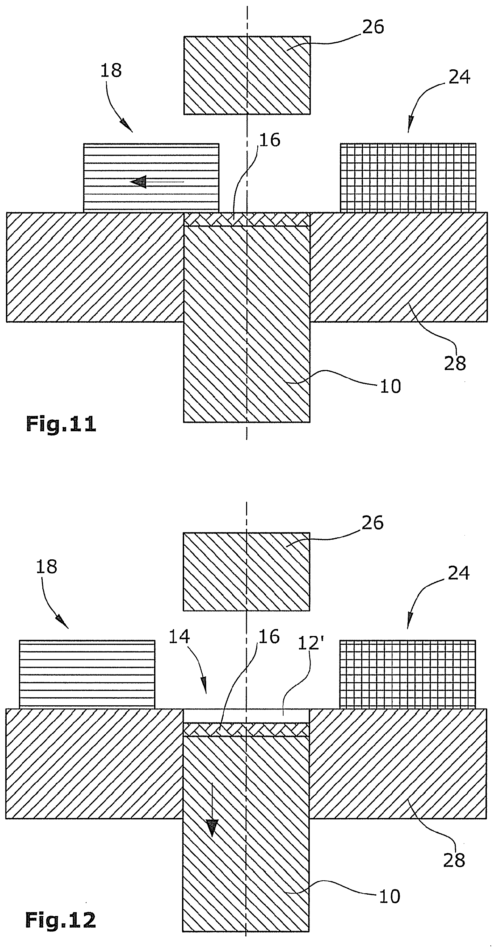

Fig. 11: Der Füller 18 fährt wieder in die Ausgangsposition zurück und streift das (Pulver-)Material 16 in der Matrizenkavität 14 auf Höhe der Matrizenoberseite 20 ab.

Fig. 12: Der Unterstempel 10 bewegt sich abwärts und gibt so den einen weiteren Teilfüllraum 12' (der Kavität 14) für ein zweites (Pulver-)Material 22 vor.

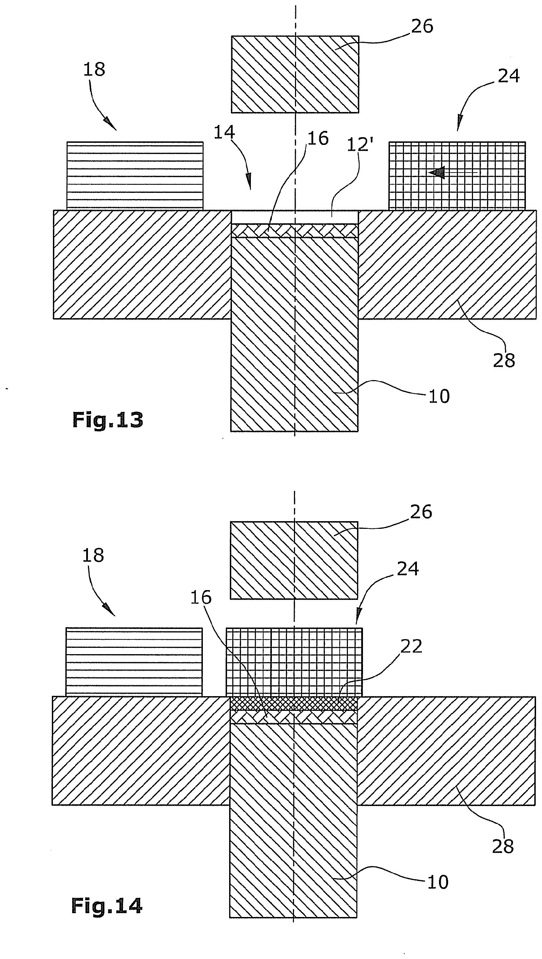

Fig. 13: Der zweite Füller 24 bewegt sich über die Kavität 14.

Fig. 14: Das (Pulver-)Material 22 fällt durch Schwerkraft in die Matrizenkavität 14 auf das (Pulver-)Material 16.

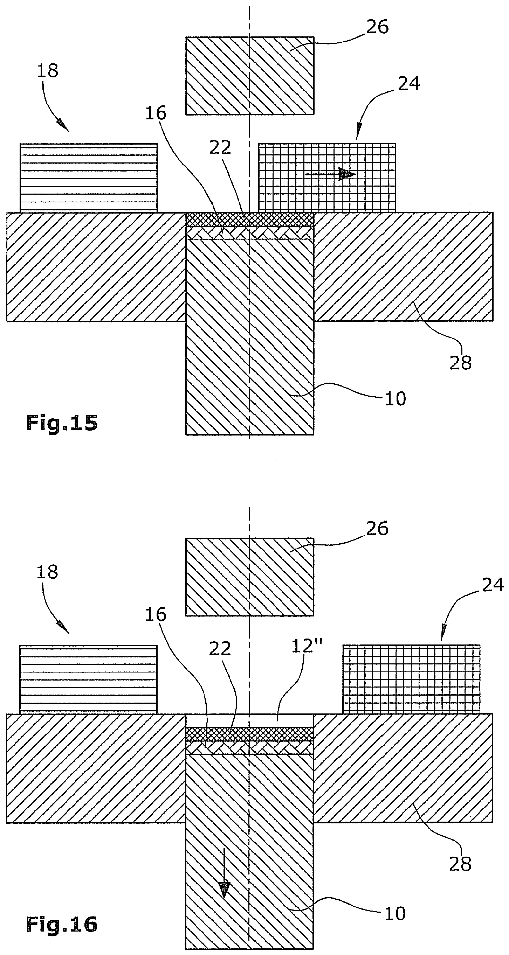

Fig. 15: Der Füller 24 fährt wieder in die Ausgangsposition und streift dabei das (Pulver-)Material 22 auf Höhe der Matrizenoberseite 20 ab.

Fig. 16: Der Unterstempel 10 bewegt sich schrittweise weiter abwärts und gibt so einen weiteren Teilfüllraum 12" für die nächste Lage von erstem (Pulver-)Material 16 vor. Dabei handelt es sich dann um die zweite Schicht von (Pulver-)Material 16.

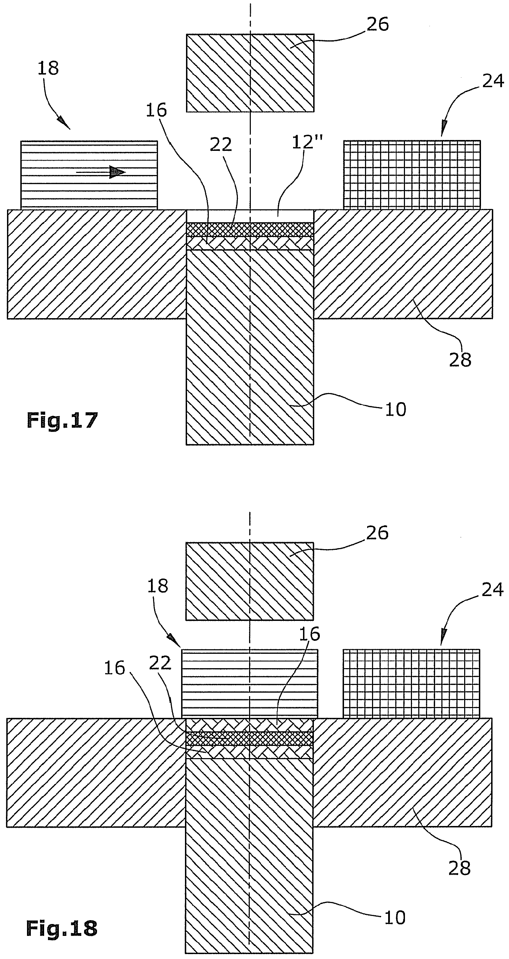

Fig. 17: Der Füller 18 bewegt sich über die Matrizenkavität 14.

Fig. 18: Das (Pulver-)Material 16 fällt aus dem Füller 18 durch Schwerkraft in die Matrizenkavität 14 auf das (Pulver-)Material 22.

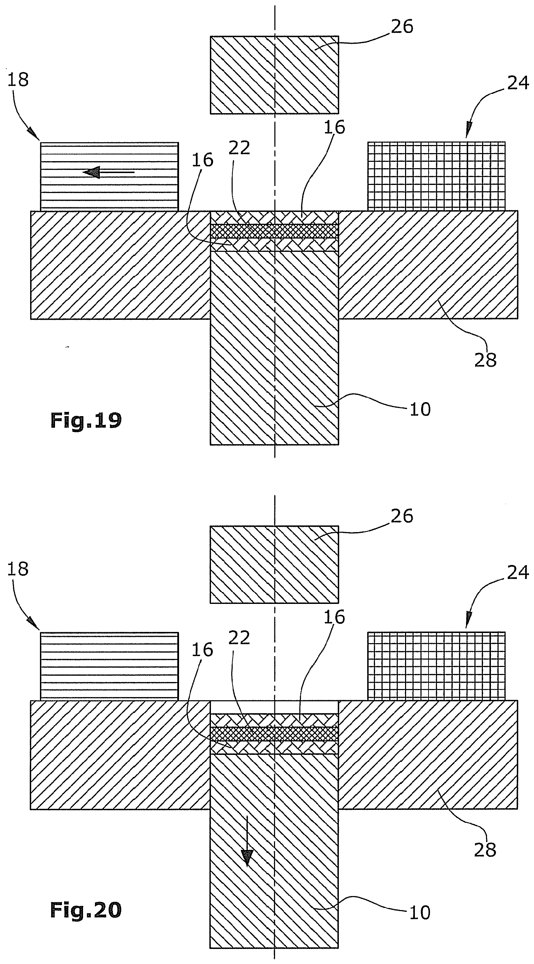

Fig. 19: Der Füller 18 wird in die Ausgangsposition zurückbewegt.

Fig. 20: Der Unterstempel 10 bewegt sich weiter schrittweise abwärts und gibt so einen weiteren Teilfüllraum für die nächste Lage von zweitem (Pulver-)Material 22 vor.

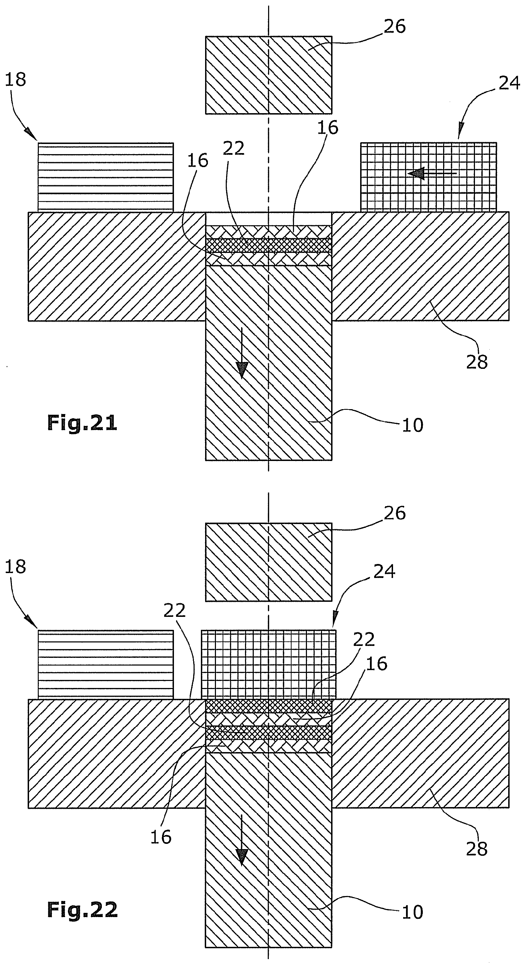

Fig. 21: Der Füller 24 bewegt sich über die Kavität 14.

Fig. 22: Das (Pulver-)Material 22 fällt durch Schwerkraft in die Matrizenkavität 14 auf das obere (Pulver-)Material 16.

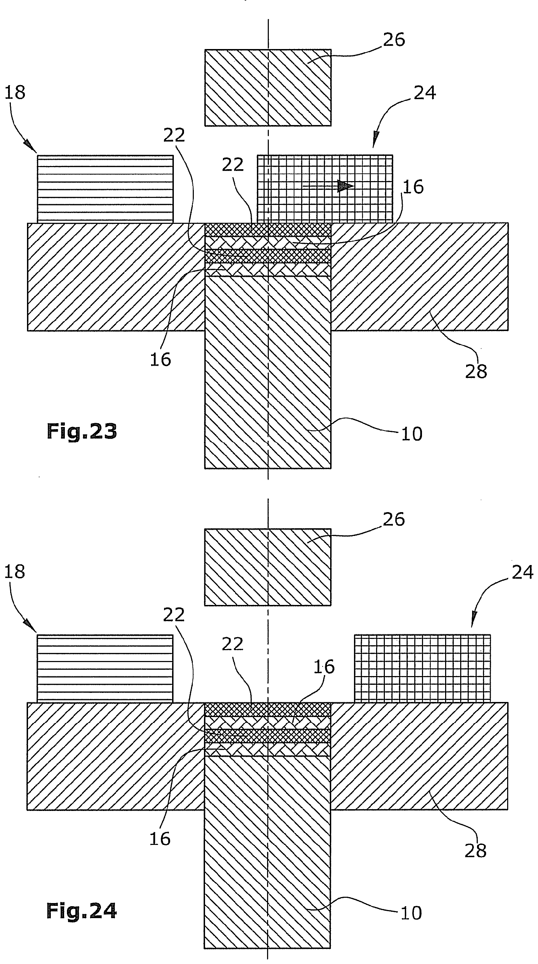

Fig. 23: Der Füller 24 fährt wieder in die Ausgangsposition und streift dabei das (Pulver-)Material 22 auf Höhe der Matrizenoberseite 20 ab.

Fig. 24: Die Matrizenkavität 14 ist mit zwei Lagen aus zwei Materialien, die wechselweise übereinander angeordnet sind, gefüllt.

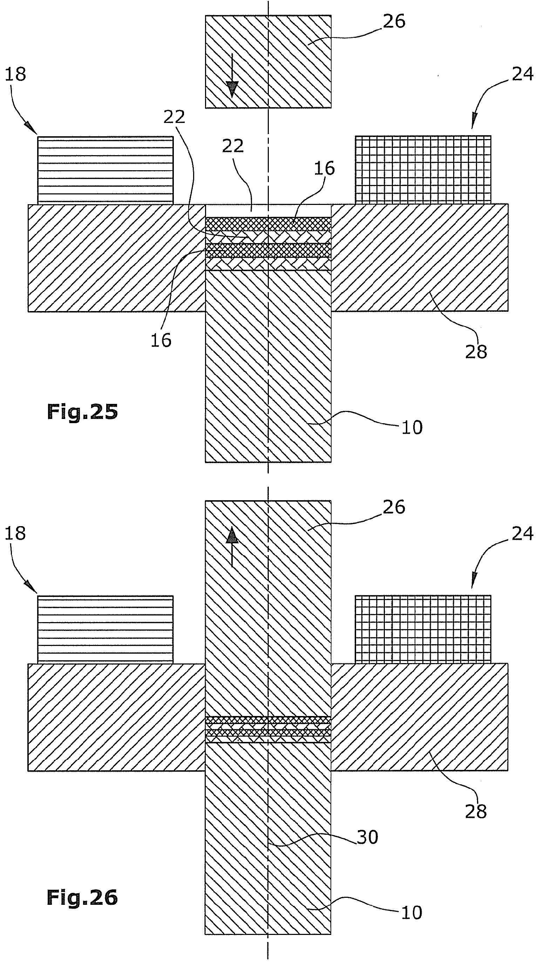

Fig. 25: Der Oberstempel 26 bewegt sich auf den Unterstempel 10 zu. Der Unterstempel 10 kann vor dem Verpressen der Materiallagen in der Kavität 14 durch den Oberstempel, wie hier gezeigt, leicht nach unten gefahren werden (zur Erzeugung eines sogenannten Unterfüllung).

Fig. 26: Der Oberstempel 26 verpresst die vier Schichten auf die gewünschte Dichte und bewegt sich dann wieder in die Ausgangsposition zurück. Der Unterstempel 10 bleibt in der zuvor eingenommenen Position stehen. Es ist jedoch auch möglich, dass der Unterstempel 10 sich nach dem Eintauchen des Oberstempels 26 in die Matrizenkavität 14 auf den Oberstempel 26 zu bewegt. Ebenfalls ist es möglich, dass die Matrizenkavität 14 linear in Maschinenlängsachse 30 verfahren wird, wobei diese bei feststehendem Unterstempel 10 vorzugsweise mit halber Oberstempelgeschwindigkeit in gleicher Richtung wie der Oberstempel 26 verfahren wird.

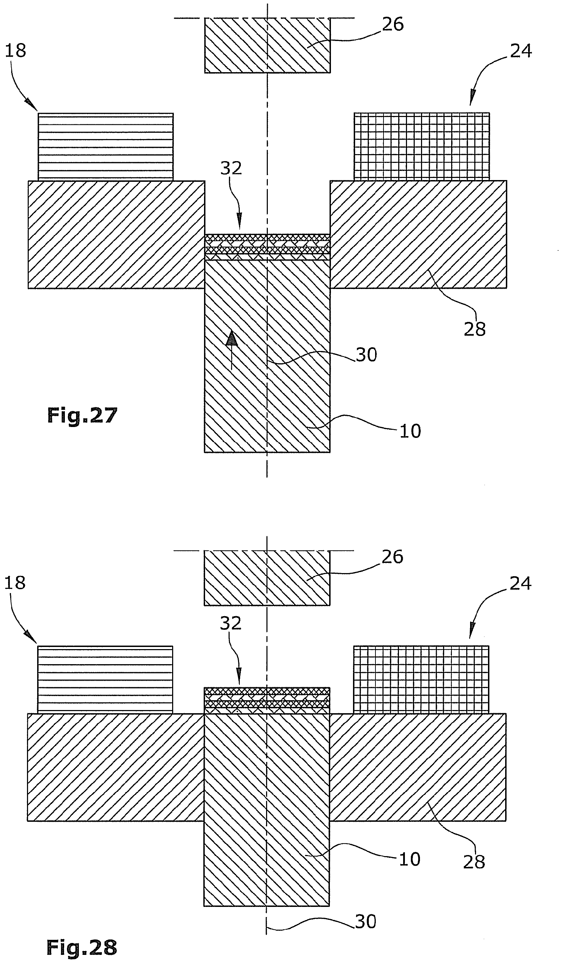

Fig. 27: Nach dem Pressvorgang wird der Pressling 32 durch den Unterstempel 10 aus der Matrize 28 ausgestoßen. Hier ist es ebenfalls möglich, dass der Oberstempel 26 während des Ausstoßens des Presslings 32 mit einer geringen Kraft auf den Pressling 32 einwirkt und sich erst nach dem vollständigen Ausstoßen des Presslings 32 in die Ausgangsposition zurückbewegt.

Fig. 28 zeigt den ausgestoßenen Pressling 32 und die Maschinenkomponenten in Ausgangsposition. Der Pressling 32 kann entnommen werden. Der Arbeitszyklus kann zur Herstellung eines nächsten Presslings von vorne beginnen.

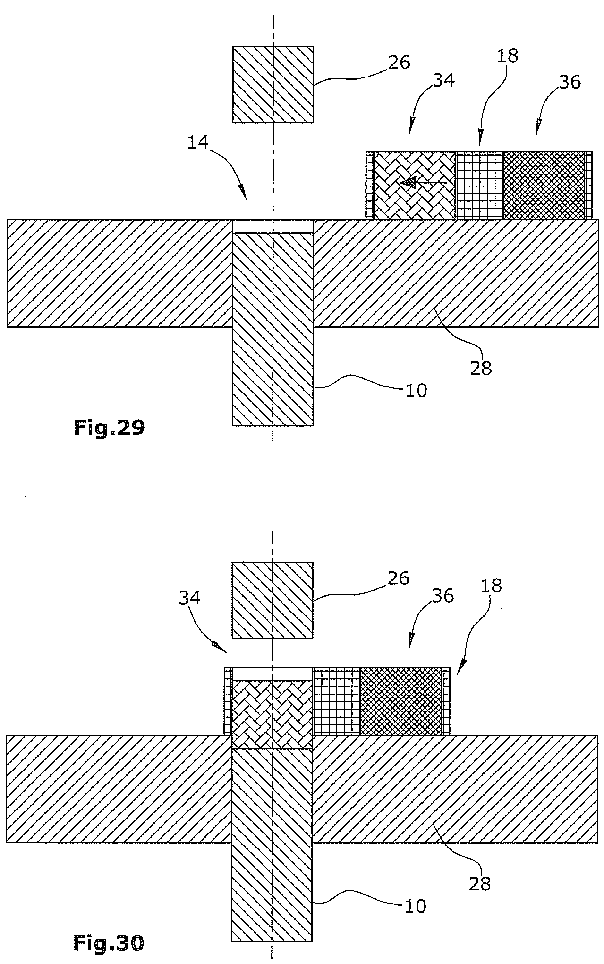

Fig. 29 bis Fig. 44. zeigen den prinzipiellen Ablauf des Füllens mit einem (einzigen) Füller 18 mit zwei Kammern 34, 36, der somit zwei unterschiedliche Pulver bevorraten kann. Hierbei ist es ebenfalls möglich, dass mehr als zwei unterschiedliche Kammern für dementsprechend mehr als zwei Pulver verwendet werden.

Fig. 29: Der Unterstempel 10 bewegt sich in die erste Füllposition und der Füller 18 bewegt sich über die Matrize 28, bis die erste Kammer 34 mit dem ersten (Pulver-)Material 16 die Matrizenkavität 14 überfährt.

Fig. 30: Der Füller 18 befindet sich mit seiner ersten Kammer 34 über der Matrizenkavität 14 und das (Pulver-)Material 16 ist aus der Kammer 34 in die Matrizenkavität gefallen.

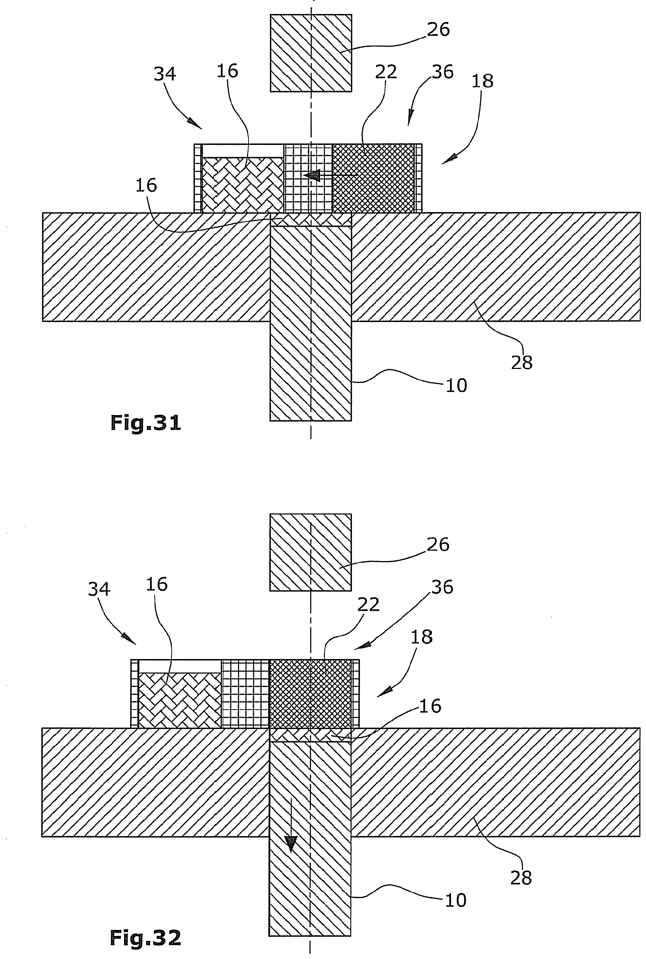

Fig. 31: Der Füller 18 wird weiter verfahren, bis seine Kammer 36 mit dem (Pulver-)Material 22 über der Matrizenkavität 14 steht.

Fig. 32: Der Unterstempel 10 wird nach unten bewegt, bis die Füllhöhe für die zweite Schicht von (Pulver-)Material 22 erreicht ist.

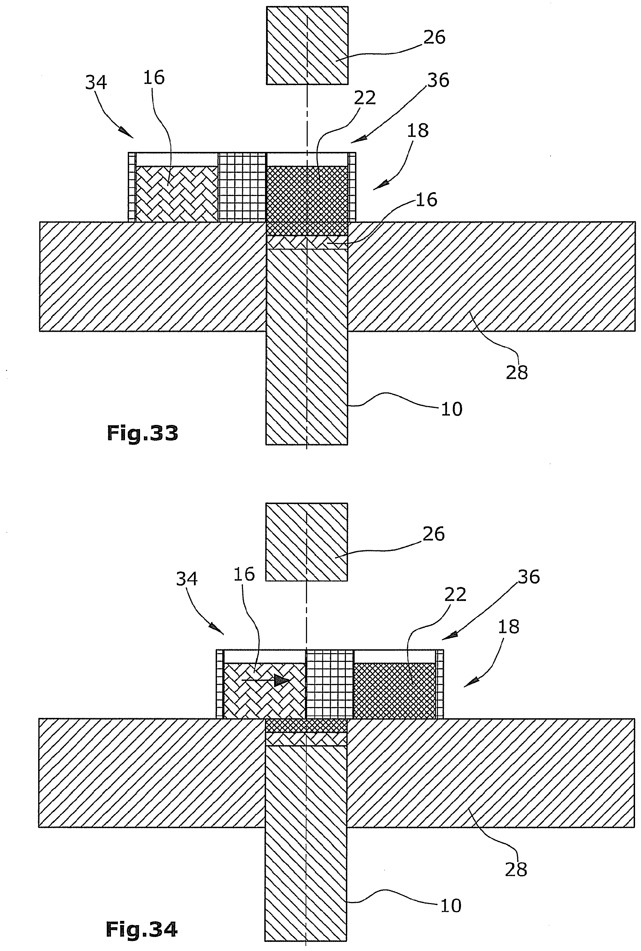

Fig. 33: Das (Pulver-)Material 22 fällt aus der Kammer 36, und zwar während des Herunterfahrens des Unterstempels 10, in die Matrizenkavität 14 und bildet so die zweite Schicht. Der Unterstempel 10 kann aber ebenso gut bereits (vollständig) heruntergefahren sein, wenn die Kammer 36 über der Kavität 14 steht.

Fig. 34: Der Füller 18 wird verfahren, bis die Kammer 34 mit dem (Pulver-)Material 16 über der Matrizenkavität 14 steht.

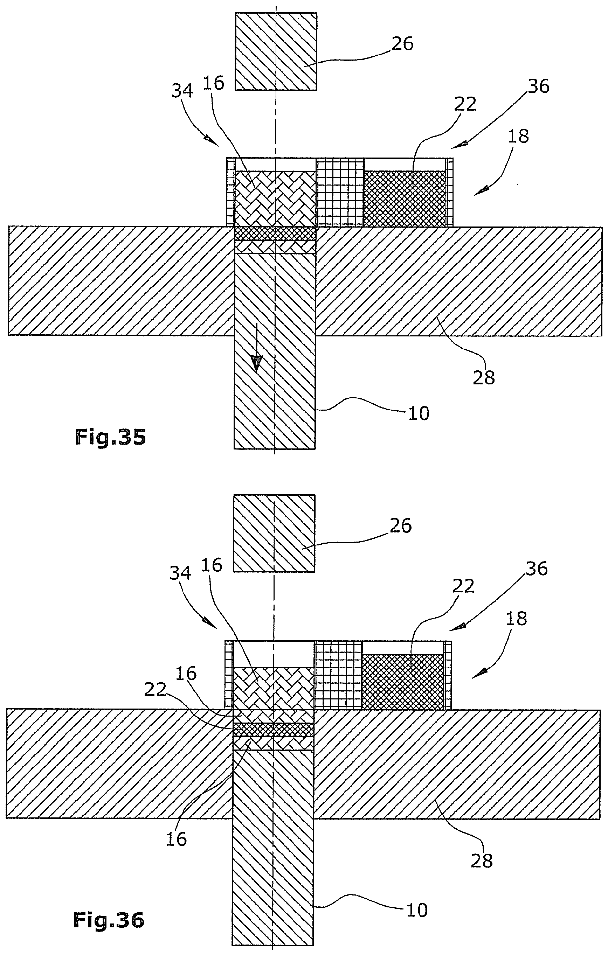

Fig. 35: Der Unterstempel 10 wird nach unten bewegt, bis die Füllhöhe für die dritte Schicht erreicht ist.

Fig. 36: Das (Pulver-)Material 16 fällt aus der Kammer 34, und zwar während des Herunterfahrens des Unterstempels 10 in die Matrizenkavität 14 und bildet so die dritte Schicht.

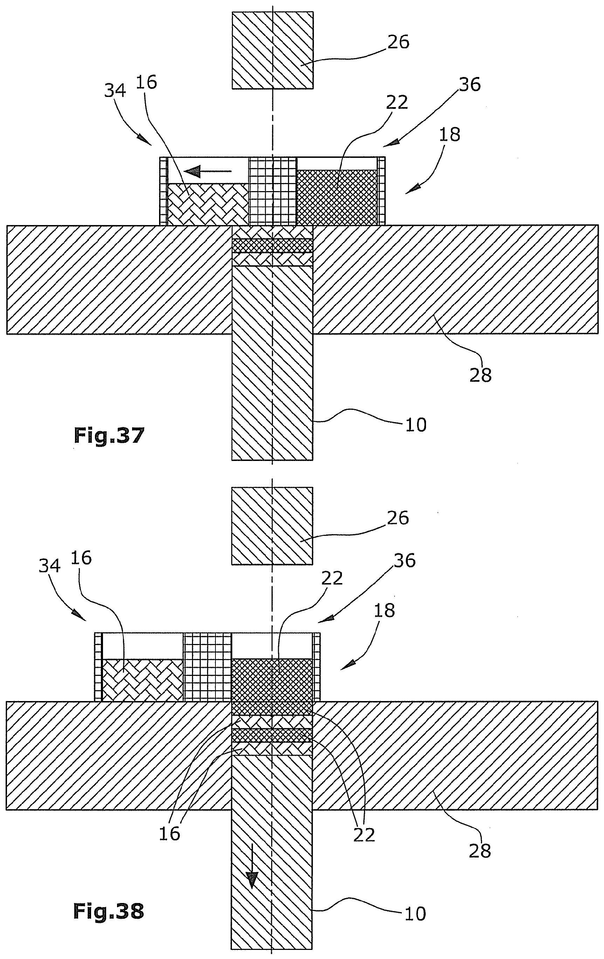

Fig. 37: Der Füller 18 wird weiter verfahren, bis die Kammer 36 mit dem (Pulver-)Material 22 über der Matrizenkavität 14 steht.

Fig. 38: Der Unterstempel 10 wird nach unten bewegt, bis die Füllhöhe für die zweite Schicht erreicht ist. Das (Pulver-)Material 22 fällt aus der Kammer 36 während des Herunterfahrens des Unterstempels 10 in die Matrizenkavität 14 und bildet so die vierte Schicht.

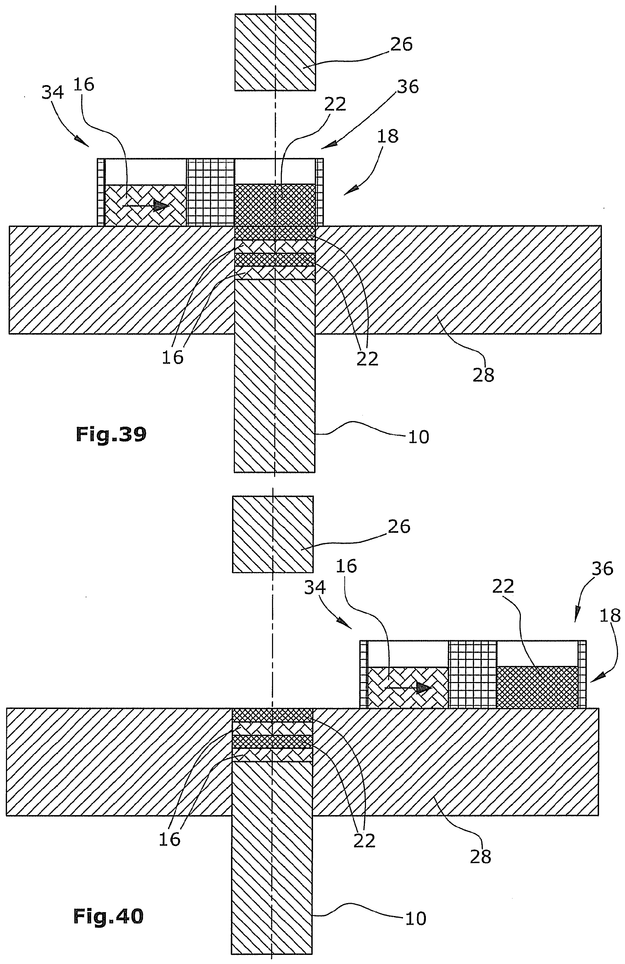

Fig. 39: Der Füller 18 wird in die Ausgangsposition verfahren.

Fig. 40: Der Oberstempel 26 wird in axialer Richtung in Richtung des Unterstempels 10 verfahren um die einzelnen Lagen zu verpressen.

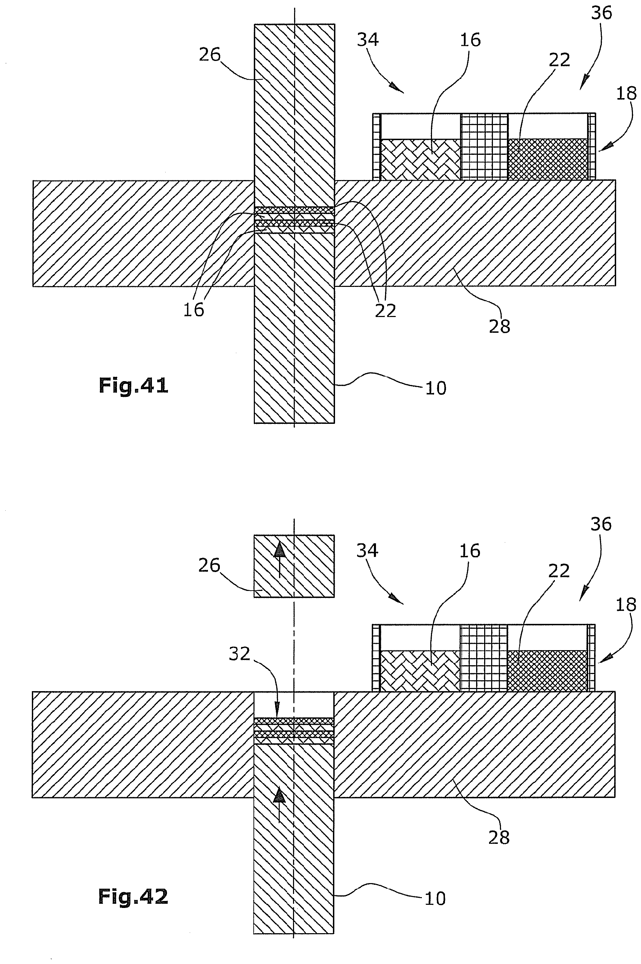

Fig. 41: Der Oberstempel 26 und Unterstempel 10 sind in Pressendstellung.

Fig. 42: Der Oberstempel 26 wird in Ausgangsposition gefahren und der Unterstempel 10 stößt den Pressling 32 aus.

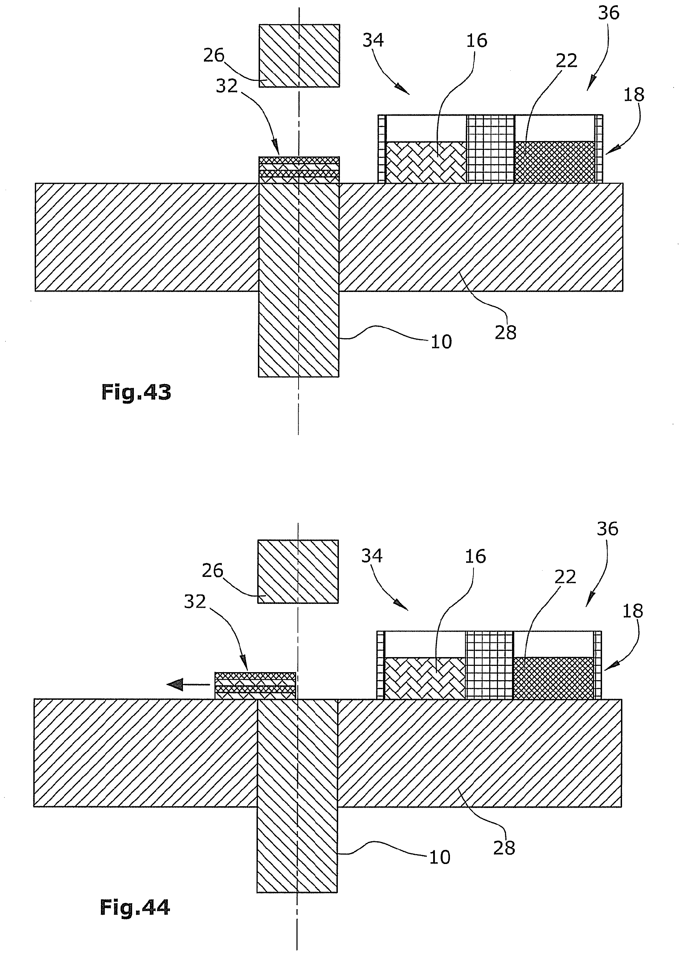

Fig. 43: Die Werkzeugkomponenten sind in ihren Ausgangspositionen mit ausgestoßenem Pressling 32.

Fig. 44: Der Pressling 32 wird entnommen, der Arbeitszyklus kann erneut beginnen.

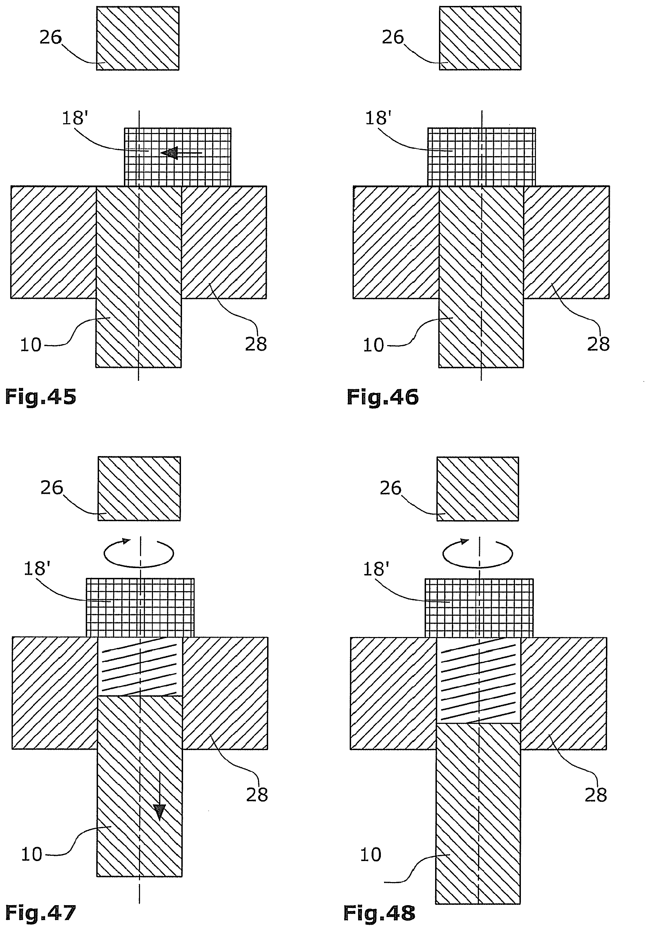

Fig. 45 bis Fig. 54 zeigen den prinzipiellen Ablauf beim Füllen der Kavität mit einem Rotationsfüller mit zwei oder mehr Kammern. Hierbei braucht sich der Füller lediglich während der Abwärtsbewegung des Unterstempels oder während der Befüllung der Kavität zu drehen. Es ist jedoch auch denkbar, dass sich der Füller permanent dreht.

Fig. 45: Der Rotationsfüller 18' wird über die Matrizenkavität 14 bewegt.

Fig. 46: Der Rotationsfüller 18' befindet sich über Matrizenkavität 14.

Fig. 47: Der Rotationsfüller 18' dreht sich um die Maschinenlängsachse 30, während sich der Unterstempel 10 entlang der Maschinenlängsachse 30 nach unten bewegt, um die Kavität 14 nach und nach zur Einbringung von Material freizugeben.

Fig. 48: Der Unterstempel 10 befindet sich in seiner unteren Füllposition. Der Rotationsfüller 18' rotiert nicht mehr.

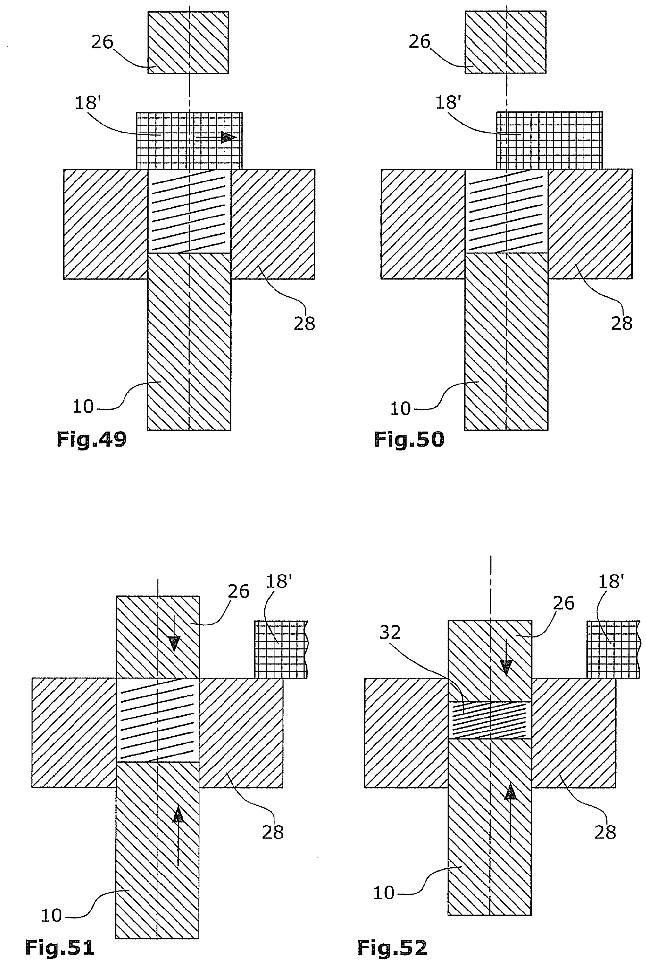

Fig. 49: Der Rotationsfüller 18' wird in die Ausgangsposition zurückbewegt.

Fig. 50: Der Rotationsfüller 18' befindet sich zwischen Füllposition und Ausgangsposition.

Fig. 51: Der Oberstempel 26 bewegt sich in Richtung auf den Unterstempel 10 zu, wobei der Rotationsfüller 18' nicht dargestellt ist.

Fig. 52: Oberstempel 26 und Unterstempel 10 verpressen das (Pulver-)Material, das sich doppelhelixförmig in der Kavität 14 befindet, zu einem Pressling 32. Auch hier ist der Rotationsfüller 18' nicht dargestellt.

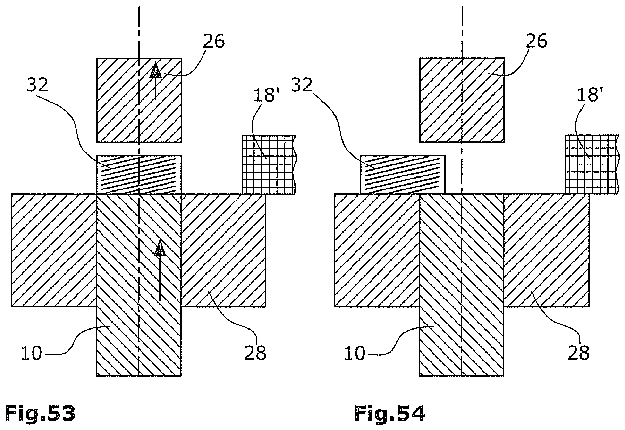

Fig. 53: Der Oberstempel 26 bewegt sich in seine Ausgangsposition. Auch der Unterstempel 10 bewegt sich in Ausgangsposition und stößt den Pressling 32 aus. Der Rotationsfüller 18' ist auch hier nicht dargestellt.

Fig. 54: Der Pressling 32 wird entnommen. Im Anschluss daran kann der Zyklus neu starten, wobei sodann der nicht dargestellte Rotationsfüller 18' wieder in Aktion tritt.

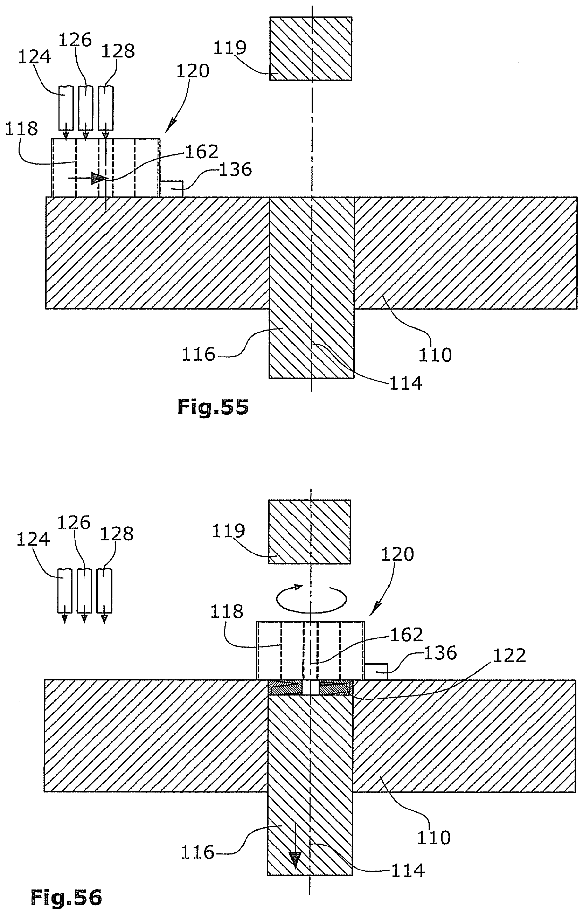

In den Fign. 55 bis 60 ist ein weiteres Ausführungsbeispiel einer Presse 100 zur Erzeugung eines Rohlings aus in diesem Fall drei verschiedenen Pulvermaterialien, die ineinander verdreht und schraubenlinienförmig im Rohling angeordnet sind, gezeigt. Gemäß Fig. 55 weist die Presse 100 eine Matrize 110 mit einer Kavität 112 auf. Die Kavität 112 ist in diesem Ausführungsbeispiel als Durchgangsöffnung der Matrize 110 ausgebildet und wird an ihrem Boden durch einen axial längs der Mittenachse 114 verfahrbaren Unterstempel 116 verschlossen. Der Oberstempel 119 ist ebenfalls längs der Mittenachse 114 der Kavität 112 vor- und zurückverfahrbar. Auf diese Weise lässt sich, wie allgemein bekannt, in die Kavität 112 eingebrachtes Pulvermaterial zu einem Rohling verpressen (ggf. unter zusätzlicher Verwendung von Wärme).

Zum Einbringen des Pulvermaterials in die Kavität 112 werden sogenannte Füller 118 eingesetzt, die allgemein auch als Befülleinrichtungen 120 bezeichnet werden können. In diesem Ausführungsbeispiel weist die Befülleinrichtung 120 einen Rotationsfüller 118 auf, der, wenn er sich über der Öffnung 122 der Kavität 112 befindet, relativ zur Kavität 112 um die Mittenachse 114 rotiert.

Der Rotationsfüller 118 ist in Fig. 55 in seiner Befüllposition gezeigt, in der in diesem Ausführungsbeispiel drei rieselfähige (z. B. Pulver-)Materialien 124, 126, 128 in drei voneinander getrennte Kammer 130, 132, 134 des Rotationsfüllers 118 eingebracht werden. Alternativ ist es auch möglich, dass der Rotationsfüller 118 während seiner Bewegung und insbesondere auch während der Abgabe von Material befüllt wird. Hierzu werden die Material-Zuführleitungen mit dem Rotationsfüller 118 gemäß einer Ausgestaltung translatorisch mitbewegt, um während der Abgabe von Material den Rotationsfüller 118 nachfüllen zu können.

In Fig. 56 befindet sich der Rotationsfüller 118 über der Kavität 112 (Füllposition) und füllt in diese unter Rotation die drei Pulvermaterialien ein. Dabei befindet sich der Unterstempel 116 zunächst in seiner obersten Stellung. Um das Volumen des eingebrachten Materials pro Zeiteinheit wird nun der Unterstempel 116 entsprechend abwärts bewegt, so dass er also pro Zeiteinheit genau das Kavitätsteilvolumen freigibt, das durch Pulvermaterial aus dem Rotationsfüller 118 in die Kavität 112 eingefüllt wird.

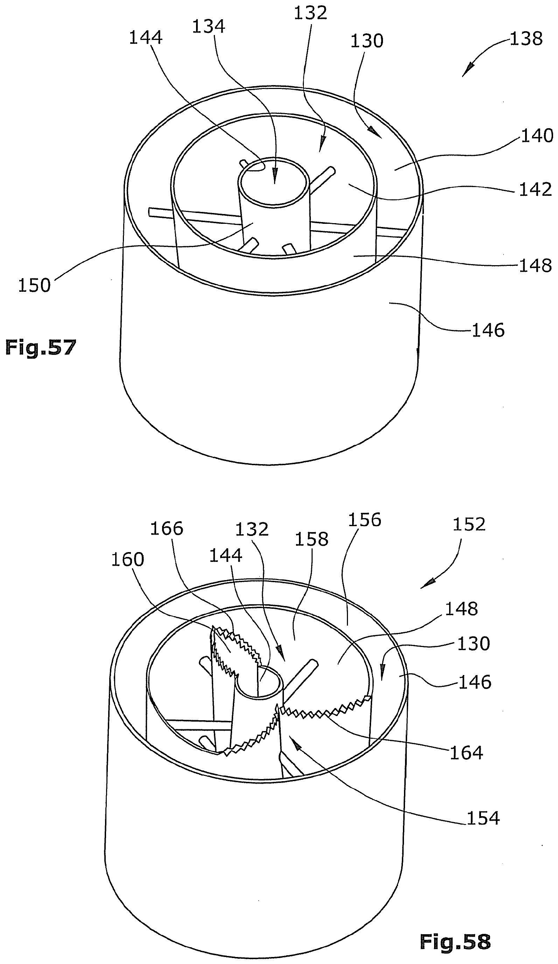

Die genauere Konstruktion des hier beschriebenen Ausführungsbeispiels des Rotationsfüllers 118 ist in den Fign. 57 und 58 gezeigt. Gemäß Fig. 57 weist der Rotationsfüller 118, der von einem Antrieb 136 drehend angetrieben wird, eine im Wesentlichen zylindrische äußere Gestalt auf, die ähnlich einer Hülse bzw. eines Rohres ist. An seinem der Kavität 112 abgewandten oberen Ende weist der Füller 118 eine Einlassöffnungsanordnung 138 mit in diesem Ausführungsbeispiel drei konzentrischen Einlassöffnungen 140, 142, 144 auf. Die zentrische Öffnung 144 wird von der Rotationsachse durchdrungen und ist konzentrisch zu dieser. Die beiden Öffnungen 140 und 142 verlaufen ringförmig umeinander jeweils herum und sind demzufolge konzentrisch angeordnet. Die drei Kammern 130, 132, 134 werden durch Kammerwände 146, 148, 150 gegeneinander abgegrenzt und nach außen begrenzt, wobei diese drei Kammerwände 146, 148, 150 im Bereich der Einlassöffnungsanordnung 138 konzentrische Ringe bilden.

Die inneren Kammerwände 148, 150 sind zum unteren, der Kavität 112 zugewandten Auslassende verformt, so dass sich in diesem Ausführungsbeispiel am unteren Ende des Rotationsfüllers 118 die Auslassöffnungsanordnung 152 gemäß Fig. d ergibt. Die äußere Kammerwand 146 ist über ihre gesamte axiale Länge im Wesentlichen zylindrisch, während die nächstinnere Kammerwand 148 am Auslassende des Rotationsfüllers 118 eine Einschnürung 154 (ähnlich einer Herzform) aufweist. Die V-förmige Einschnürung 154 weist zum Zentrum des Rotationsfüllers 118 und damit zur innersten Kammerwand 134, die am Auslassende des Rotationsfüllers 118 eine sich radial erstreckende Formgebund aufweist. Zwischen der äußeren Kammerwand 146 und der nächstinneren Kammerwand 148 bildet sich eine Auslassöffnung 156 der Kammer 130, während die nächstinnere Kammer 132 eine von der Kammerwand 148 mit Einschnürung 154 einerseits und von der Kammerwand 134 mit deren radial länglicher Ausformung gebildete Auslassöffnung 158 aufweist. Schließlich weist die dritte, innerste Kammer 134 eine Auslassöffnung 160 auf, die radial auswärts gerichtet ist und sich teilweise um die Mittenachse 162 des Füllers 118 erstreckt.

Wie insbesondere anhand von Fig. 58 zu erkennen ist, weisen die Kammerwände Zacken bzw. Kammstrukturen 164, 166 auf. Diese Kammstrukturen 164, 166 dienen zur Gradierung der aus den Kammern austretenden Pulvermaterialien an ihren jeweiligen Grenzflächen.

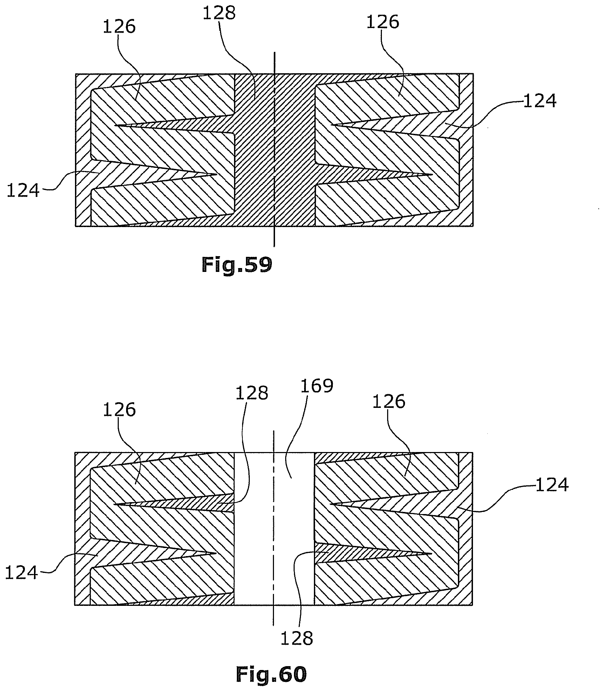

Mit der in den Fign. 57 und 58 gezeigten Konfiguration lässt sich der Rotationsfüller 118 einsetzen, um in die Kavität 112 drei Pulvermaterialien abzulegen, die drei ineinander verschlungene Teil- bzw. Vollhelixanordnungen bilden. Das aus der mittleren Kammer 132 austretende Pulvermaterial 126 liegt im Rohling bzw. in der Kavität 112 als mittlere Helix 168 vor (siehe Fig. 59). Das aus der äußeren Kammer 130 austretende Pulvermaterial 124 bildet eine zylindrische Form mit innen an der Zylinderwand verlaufender Schraubenlinie. Das aus der inneren Kammer 134 austretende Pulvermaterial 128 befindet sich im Kern des Rohlings als Vollzylinder mit außenliegendem wendelförmigen Vorsprung. Die Situation ist für einen Teilabschnitt des Rohlings in Fig. 59 gezeigt.

Fig. 60 zeigt die Situation, wenn sich bei der Rotation des Füllers 118 in dessen inneren Kammer 134 ein Dorn (nicht dargestellt) als Platzhalter befindet, der das Zentrum 169 des Rohlings frei von Pulvermaterial hält. Eine derartige Anordnung ist beispielsweise von Vorteil, um den Rohling mit einem Kanal für eine Gaszufuhr zu versehen.

Wie bereits oben erwähnt, lässt sich der Rotationsfüller insbesondere zur Herstellung eines Rohlings zur Verwendung als wasserstoffspeichernde Komponente bzw. eines wasserstoffspeichernden Bauteils einsetzen. Hierbei ist beispielsweise das über die mittlere Kammer 132 zugeführte und die Kavität 112 eingelassene Material 126 hydrierbar, während das Material 124, das über die äußere Kammer 130 des Rotationsfüllers 118 in die Kavität 112 gelangt, wärmeleitende Eigenschaften aufweist. Im Inneren des Rohlings befindet sich dann gasdurchlässiges Material 128. Das innere Material des Rohlings sorgt also für die Zufuhr und die damit die Porosität des Rohlings, so dass in diesen Wasserstoff eingeleitet werden kann, der dann am hydrierbaren Material bindet. Die dabei entstehende Wärme wird über das Material 124 nach außen abgeführt. Außen um das Wasserstoffspeicherbauteil (Rohling) herum befindet sich ein (Druck-)Behälter, der in thermischem Kontakt mit dem wasserstoffspeichernden Bauteil steht.

Ganz allgemein sei im Zusammenhang mit der Erfindung noch darauf hingewiesen, dass neben einem Verbund der Partikel der pulverförmigen Materialien untereinander durch Verpressung (ggf. zusätzlich unter Einwirkung von Wärme) auch zusätzlich noch mit additiven Verfahren gearbeitet werden kann, wie beispielsweise Laserschmelzen. Dazu wird beispielsweise über Hohlwände des Füllers ein oder mehrere Laserstrahlenbündel eingeleitet, die über Prismen umgelenkt und über transparente Öffnungen in den Hohlwänden des Füllers in das gerade ausgegebene Pulvermaterial eintreten, wo es zu einer örtlichen Verschmelzung des Pulvers kommt.

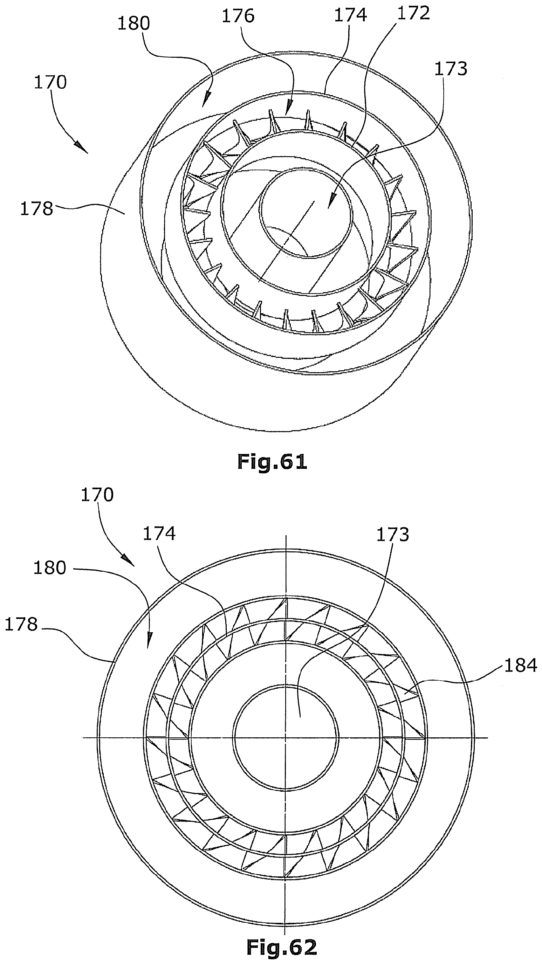

In Fig. 61 ist perspektivisch bzw. in Fig. 62 von oben ein weiteres Ausführungsbeispiel eines Rotationsfüllers 170 gezeigt. Wie beim Ausführungsbeispiel der Fign. 55 bis 60 weist der Rotationsfüller 170 drei Ring-Kammern auf, die allerdings im Unterschied zu den Fign. 55 bis 60 im Wesentlichen durchgehend konzentrisch angeordnet sind. Eine innere Trennwand 172 begrenzt eine innere Kammer 173, während eine mittig angeordnete weitere zylindrische Wand 174 eine zweite Kammer 176 begrenzt. Außen befindet sich eine dritte zylindrische Wand 178, die die Außenkammer 180 definiert. Das besondere an dem Rotationsfüller 170 besteht nun darin, dass sich auslassseitig eine weitere Kammer 182 bildet, in die wandnahrieselndes Material beidseitig der mittleren Kammerwand 174 gelangt. Strömungseingangs der Kammer 182 befinden sich Umlenkelemente 184, die für eine örtliche Vermischung der beiden wandnahen Materialströme sorgen.

Die Merkmale einzelner Ausgestaltungen der Erfindung werden beispielhaft nachfolgend nochmals gruppiert angegeben, wobei die Merkmale einzelner Gruppen miteinander sowie auch mit Merkmalen der weiter oben beschriebenen Ausführungsbeispiele, Ausgestaltungen und Varianten der Erfindung kombiniert werden können, und zwar durch Hinzufügung oder Weglassen einzelner Merkmale.
1. Vorrichtung, vorzugsweise Presse, umfassend
   eine zu befüllende Kavität,
   zumindest eine erste Materialzuführung eines ersten Materials und eine zweite Materialzuführung eines zweiten Materials, wobei die erste und die zweite Materialzuführung getrennt voneinander angeordnet sind,
   mit einer Zuführvorrichtung zum Zuführen des ersten und des zweiten Materials in die zu befüllende Kavität,
   wobei die Zuführvorrichtung einen Mündungsquerschnitt mit zumindest einem ersten Bereich des Mündungsquerschnitts für das erste Material und mit einem davon abgetrennten zweiten Bereich des Mündungsquerschnitts für das zweite Material aufweist zum vorzugsweise parallelen, örtlich getrennten Befüllen der Kavität.
2. Vorrichtung nach Ziffer 1, wobei die zu befüllende Kavität vorzugsweise rund ist und vorzugsweise ein Einwirkelement mit Kontaktfläche zum Interagieren mit dem Material der Kavität, insbesondere in Form eines Kamms, einer glatten oder konturierten Leiste oder einer Rolle vorgesehen ist, die zumindest auf eine Oberfläche des in die Kavität eingefüllten zumindest ersten und/oder zweiten Material verfahrbar und entlang dieser bewegbar ist, besonders bevorzugt in das zumindest erste und/oder zweite Material verfahrbar und darin bewegbar ist.
3. Vorrichtung nach Ziffer 1 oder 2, wobei der erste Bereich zumindest zum Teil, vorzugsweise vollständig an den zweiten Bereich angrenzt.
4. Vorrichtung nach einer der vorhergehenden Ziffern, wobei die Vorrichtung einen Antrieb aufweist, mittels dessen zumindest eine gesteuerte Relativbewegung zwischen der zu befüllenden Kavität und der Zuführvorrichtung ermöglicht ist.
5. Vorrichtung nach einer der vorhergehenden Ziffern, wobei diese eine Drehachse aufweist, um die die Zuführvorrichtung drehbar angeordnet ist und/oder dass die Kavität drehbar angeordnet ist.
6. Vorrichtung nach einer der vorhergehenden Ziffern, wobei die zu befüllende Kavität eine Matrizenkavität und die Zuführvorrichtung ein Füller ist und die Vorrichtung eine Pressenvorrichtung umfasst zum Verdichten des zumindest ersten und des zweiten Materials in der Matrizenkavität.
7. Vorrichtung nach einer der vorhergehenden Ziffern, wobei eine Kontaktfläche, vorzugsweise in Form eines Kamms, einer glatten oder auch konturierten Leiste oder einer Rolle vorgesehen ist, die mittels einer Verfahrvorrichtung soweit verfahrbar ist, dass diese in Kontakt mit dem in die Kavität eingefülltem Material gerät, wobei eine Verfahrvorrichtung die Kontaktfläche im Material verfährt.
8. Vorrichtung nach Ziffer 7, wobei die Kontaktfläche mindestens in das Material und entlang des Materials verfahrbar ist.
9. Zuführvorrichtung für eine Vorrichtung, insbesondere einer Presse, vorzugsweise nach einer der Ziffern 1 bis 6 zum Zuführen von zumindest einem ersten und einem zweiten Material, mit einem Mündungsquerschnitt der Zuführvorrichtung, der zumindest einen ersten Bereich und einen davon abgetrennten zweiten Bereich zum parallelen, getrennten Zuführen des ersten und des zweiten Materials aufweist.
10. Zuführvorrichtung nach Ziffer 9, wobei die Zuführvorrichtung eine verfahrbare Kontaktfläche, vorzugsweise einen Kamm, eine glatte oder auch konturierte Leiste oder einer Rolle aufweist, vorzugsweise nach Ziffer 7 oder 8, vorzugsweise zum gezielten Orientieren von nicht kugeligen Partikeln wie längliche, plattchenförmige Partikel oder Faserstücke und/oder Erzeugen eines Verteilungsgradienten für Partikel und/oder Faserstücke.
11. Zuführvorrichtung nach Ziffer 9 oder 10, wobei diese eine Materialzuführung für das erste Material und eine davon getrennte Materialzuführung für das zweite Material aufweist, wobei eine Mischzonenzuführung vorhanden ist, entlang derer das erste und das zweite Material mischbar und zuführbar ist.
12. Zuführvorrichtung nach Ziffer 9, 10 oder 11, wobei eine zusätzliche Streifenzuführung vorhanden ist, über die ein Materialstreifen in den Mündungsquerschnitt führbar ist.
13. Verfahren zur Herstellung eines Rohlings, vorzugsweise mit einer Vorrichtung nach einer der Ziffern 1 bis 8, mittels zumindest eines ersten Materials und mittels eines zweiten Materials, wobei eine erste Materialzufuhr des ersten Materials über einen ersten Bereich einer Zuführvorrichtung und eine zur ersten Materialzufuhr parallele zweite Materialzufuhr des zweiten Materials über einen zweiten Bereich der Zuführvorrichtung erfolgt, wobei das parallel und in getrennten Bereichen zugeführte zumindest erste und das zweite Material in eine Kavität gefüllt und daraus der Rohling gebildet wird.
14. Verfahren nach Ziffer 13, wobei die Zuführvorrichtung und die Kavität sich beim Befüllen relativ zueinander bewegen.
15. Verfahren nach Ziffer 13 oder 14, wobei die Zuführvorrichtung gedreht wird, wobei das erste und das zweite Material aus der Zuführvorrichtung dabei parallel austreten.
16. Verfahren nach Ziffer 15, wobei eine nichtebene, bevorzugt helixförmige oder wellenförmige Geometrie im Rohling gebildet wird.
17. Verfahren nach einer der vorhergehenden Ziffern, wobei das erste und das zweite Material eine poröse Struktur bilden, vorzugsweise ein oder mehrere Kanäle im Verbundmaterial mittels ein oder mehreren Dornen, Freihalter und/oder zu entfernendem Material hergestellt werden.
18. Verfahren nach einer der vorhergehenden Ziffern, wobei das erste und das zweite Material zumindest teilweise örtlich getrennt voneinander angeordnet werden und getrennte Schichten bilden.
19. Verfahren nach einer der vorhergehenden Ziffern, wobei das erste und das zweite Material in eine Kavität gefüllt werden, wobei das erste und das zweite Material in der Kavität verpresst werden, vorzugsweise mittels eines Verfahrens eines Ober- und eines Unterstempels in der Kavität.
20. Verfahren nach einer der vorhergehenden Ziffern 11 bis 18, wobei ein isostatisches Verpressen des Verbundmaterials des Wasserstoffspeichers erfolgt.
21. Verfahren nach einer der vorhergehenden Ziffern, wobei eine verfahrbare Kontaktfläche, vorzugsweise ein Kamm, eine glatte oder auch konturierte Leiste oder eine Rolle, in das in die Kavität verfüllte Material einfährt und in dem Material verfahren wird.
22. Rohling mit zumindest einem ersten und einem zweiten Material, vorzugsweise nach einer der vorhergehenden Ziffern, wobei das erste und das zweite Material zumindest in einem Bereich getrennt voneinander angeordnet sind und getrennte Schichten bilden.
23. Rohling nach Ziffer 22, wobei der Grünling eine Materialverteilung zumindest des ersten Materials aufweist, die helixförmig ist.
24. Rohling nach Ziffer 22 oder 23, wobei zumindest ein drittes Material vorgesehen ist.

Weitere Merkmale einzelner Ausgestaltungen der Erfindung werden beispielhaft nachfolgend nochmals gruppiert angegeben:
B1. Pressenvorrichtung mit einer Vorrichtung zur Befüllung eines Formwerkzeugs der Pressenvorrichtung mit mindestens zwei verschiedenen Materialien, mit
   - einer mit den mindestens zwei Materialien (124, 126, 128) zu befüllenden Kavität (112) und
   - einer Befülleinrichtung (120) zum Auslassen der mindestens zwei Materialien (124, 126, 128) zwecks Einbringung dieser Materialien (124, 126, 128) in unterschiedliche Bereiche der Kavität (112),
   - wobei die Befülleinrichtung (120) mindestens zwei getrennte Kammern (130, 132, 134) oder mindestens zwei Kammerbereiche einer gemeinsamen Kammer zur gleichzeitigen Zuführung der mindestens zwei Materialien (124, 126, 128), direkt aneinander angrenzend oder örtlich getrennt voneinander, zur Einbringung derselben in die Kavität (112) als zumindest teilweise voneinander unterscheidbare Schichten aufweist, und
   - mit einer relativen Rotationsbewegung zwischen der Befülleinrichtung (120) und der Kavität (112), vorzugsweise um eine gemeinsame Achse, vorzugsweise um eine gemeinsame Mittenachse, während eines Befüllvorgangs.
B2. Pressenvorrichtung nach Ziffer B1, wobei die Befülleinrichtung (120) und die Kavität (112) und/oder ein Boden der Kavität (112) während des Befüllvorgangs relativ zueinander translatorisch bewegbar sind, vorzugsweise längs der Mittenachse (114) voneinander wegbewegbar sind.
B3. Pressenvorrichtung nach Ziffer B1 oder B2, wobei sich eine erste der Kammern (130, 132, 134) zumindest teilweise um die Mittenachse (114) herum erstreckt und dass sich mindestens eine zweite der Kammern (130, 132, 134) ebenfalls zumindest teilweise um die Mittenachse (114) herum erstreckt, vorzugsweise die zweite der Kammern (130, 132, 134) sich um die erste Kammer (134) herum erstreckt.
B4. Pressenvorrichtung nach einer der Ziffern B1 bis B3, wobei die Befülleinrichtung (120) eine der Kavität (112) zugewandte Auslassöffnungsanordnung (152) aufweist, die für jede Kammer (130, 132, 134) mit zumindest einer Auslassöffnung (156, 158, 160) versehen ist, wobei vorzugsweise eine Auslassöffnung für eine Mischung von zwei verschiedenen Materialien aus zwei verschiedenen Kammern (156, 158, 160) vorgesehen ist und/oder eine Kammer (130, 132, 134) mehrere Auslassöffnungen (156, 158, 160) speist.
B5. Pressenvorrichtung nach Ziffer B4, wobei die Befüllvorrichtung (120) zum Zuführen von zumindest einem ersten und einem zweiten Material mit einem Mündungsquerschnitt der Befüllvorrichtung (120) versehen ist, der zumindest einen ersten Bereich und einen davon abgetrennten zweiten Bereich zum parallelen, getrennten Zuführen des ersten und des zweiten Materials aufweist, wobei vorzugsweise Auslassöffnungen (156, 158, 160) mindestens zweier Kammern (130, 132, 134) in Drehrichtung und/oder Radialrichtung betrachtet derart versetzt zueinander angeordnet sind, dass die Auslassöffnungen (156, 158, 160) bei einer Relativdrehung zwischen der Befülleinrichtung (120) und der Kavität zumindest zum Teil gleiche Flächenbereiche überstreichen, vorzugsweise so, dass diese nur zum Teil einander überlappen.
B6. Pressenvorrichtung nach einer der Ziffern B3 bis B5, wobei die Auslassöffnung (160) der ersten Kammer (134) sich quer zur Ausrichtung der Mittenachse (114) erstreckt, und zwar insbesondere zu einer Seite der Mittenachse (114), und innerhalb der Auslassöffnung (158) der zweiten Kammer (132) angeordnet ist, die sich ihrerseits um die Mittenachse (114) herum erstreckt.
B7. Pressenvorrichtung nach einer der Ziffern B1 bis B6, wobei die Befülleinrichtung (120) eine dritte Kammer (130) aufweist, wobei die dritte Kammer (130) sich außen um die zweite Kammer (132) herum erstreckt und eine Auslassöffnung (156) aufweist, die sich um die zweite Auslassöffnung (158) herum erstreckt, wobei die zweite Auslassöffnung (158) eine im Wesentlichen V-förmige, in Richtung auf die Mittenachse (114) weisende Einschnürung (154) aufweist.
B8. Pressenvorrichtung nach Ziffer B7, wobei die Position der Einschnürung (154) der Position der ersten Auslassöffnung (160), bezogen auf die Mittenachse (114), im Wesentlichen diametral gegenüberliegt.
B9. Pressenvorrichtung nach einer der Ziffern B1 bis B8, wobei die Befülleinrichtung (120) Befüllöffnungen (140, 142, 144) für die einzelnen Kammern (130, 132, 134) aufweist und dass die Mittenachse (114) durch eine der ersten Kammer zugeordnete erste Einlassöffnung (144) hindurch verläuft und sich eine der zweiten Kammer zugeordnete zweite Einlassöffnung (142) ringförmig um die erste Einlassöffnung (144) erstreckt.
B10. Pressenvorrichtung nach Ziffer B9, wobei bei einer dritten Kammer (130) deren Einlassöffnung (140) sich außen um die zweite Einlassöffnung (142) ringförmig erstreckt.
B11. Pressenvorrichtung nach einer der Ziffern B1 bis B10, wobei die einzelnen Kammern (130, 132, 134) voneinander durch jeweils eine Wand (146, 148, 150) getrennt sind und dass die Wände (146, 148, 150) in ihren in den Auslassöffnungen (156, 158, 160) liegenden Randbereichen mindestens eine Randaussparung oder einen Randvorsprung, insbesondere eine gezackte oder Kammstruktur (164, 166) aufweisen.
B12. Pressenvorrichtung nach einer der Ziffern B1 bis B11, wobei die Befülleinrichtung (18, 24, 120) mindestens ein rieselfähiges Material, vorzugsweise mehrere rieselfähige Materialien, das bzw. die insbesondere in Pulverform vorliegt/vorliegen, ausgibt.
B13. Pressenvorrichtung nach einer der Ziffern B1 bis B12, wobei die Befülleinrichtung (18, 24, 120) eine zusätzliche Streifenzuführung aufweist, über die ein strang-, streifen- oder bandförmigen Materials in die Kavität (14, 112) einbringbar ist.
B14. Pressenvorrichtung nach einer der Ziffern B1 bis B13, wobei zumindest zwei der in die Kavität (14, 112) einzubringenden Materialien zeitlich getrennt oder zeitgleich in die Kavität (14, 112) gelangen.
B15. Pressenvorrichtung nach einer der Ziffern B1 bis B14, wobei die Befülleinrichtung (18, 24, 120) ein Einwirkelement wie z. B. ein Rakel, einen Kamm, einen Abstreifer, eine Rolle, eine Leiste oder dergleichen zur Interaktion mit zumindest einem in die Kavität (14, 112) eingebrachten Material, insbesondere zur Interaktion zwecks Ausrichtens mindestens eines nicht-kugeligen Materials und/oder eines nicht-kugeligen Bestandteils dieses Materials und/oder zur Beeinflussung der Verteilung des mindestens einen Materials und/oder eines Bestandteils dieses Materials zur Erzeugung eines Verteilungsgradienten aufweist.
B16. Pressenvorrichtung nach einer der Ziffern B1 bis B15, wobei die unterschiedlichen, mit den Materialien (16, 22) zu befüllenden Bereiche der Kavität (14, 112) zumindest teilweise oder vollständig aneinandergrenzen.
B17. Pressenvorrichtung nach einer der Ziffern B1 bis B16, wobei die Befülleinrichtung (18, 24, 120) eine Mischzone zum Vermischen der mindestens zwei Materialien (16, 22) aufweist.
B18. Pressenvorrichtung nach einer der Ziffern B1 bis B17, wobei die Befülleinrichtung (18, 24, 120) und die Kavität (14, 112) bei Positionierung der Befülleinrichtung (18, 24, 120) mit deren Auslassanordnung über oder in der Kavität (14, 112) relativ zueinander eine definiert überlagerte rotatorische und translatorische Bewegung ausführen, vorzugsweise zur helixförmigen Einbringung mindestens eines der Materialien (16, 22) um eine gemeinsame Achse, entlang der die Befülleinrichtung (18, 24, 120) relativ zur Kavität (14, 112) rotatorisch in einer Richtung bewegbar oder rotatorisch vor- und zurückbewegbar ist.
B19. Pressenvorrichtung nach einer der Ziffern B1 bis B18, wobei mindestens eines der Materialien (16, 22) porös ist oder eine poröse Struktur bildet und/oder dass durch mindestens eines in die Kavität (14, 112) eingebrachten Elements (16, 22), insbesondere in Form von Dornen, eine von mindestens einem Kanal durchzogene Struktur gebildet ist.
B20. Pressenvorrichtung zur Herstellung eines Presslings mit
   - einer mit den Merkmalen mindestens einer der vorhergehenden Ziffern ausgebildeten Vorrichtung zur Befüllung eines Formwerkzeugs für den Pressling mit mindestens zwei verschiedenen Materialien (16, 22) und
   - einer Verdichteinrichtung zur Verdichtung von Material (16, 22) innerhalb der Kavität (14, 112).
B21. Pressenvorrichtung nach Ziffer B20, wobei die Verdichteinrichtung mindestens einen in die Kavität (14, 112) eintauchbaren Stempel (10, 26, 116, 119) aufweist.
B22. Pressenvorrichtung nach Ziffer B20 oder B21, wobei die Kavität (14, 112) aus einer Durchgangsöffnung in einer Matrize (28, 110) und einem die Durchgangsöffnung zu einer Seite hin verschließenden ersten Stempel (10, 116) gebildet ist und dass ein zweiter Stempel (26, 119) vorgesehen ist, wobei mindestens der zweite Stempel (26, 119) in Richtung auf den ersten Stempel (10, 116) in die Kavität (14, 112) bzw. innerhalb der Kavität (14, 112) verfahrbar ist.
B23. Verfahren zur Befüllung eines Formwerkzeugs einer Pressenvorrichtung, vorzugsweise einer Pulverpresse mit mindestens zwei verschiedenen Materialien, vorzugsweise mit einer Vorrichtung nach einer der Ziffern B1 bis B22, wobei bei dem Verfahren
   - mindestens zwei verschiedene Materialien (16, 22) zur Befüllung einer Kavität (14, 112) ausgegeben und in die Kavität (14, 112) eingebracht werden,
   - wobei die mindestens zwei Materialien (16, 22) in verschiedenen Bereichen einer Befülleinrichtung (18, 24, 120) unter Relativverdrehung von Befülleinrichtung (18, 24, 120) und Kavität (14, 112) aus der Befülleinrichtung (18, 24, 120) ausgegeben sowie in verschiedene Bereiche der Kavität (14, 112) eingebracht werden.
B24. Verfahren nach Ziffer B23, wobei die Materialien (16, 22) zeitgleich als nebeneinander verlaufende Materialströme intermittierend oder kontinuierlich austreten und dass die Materialströme unter Verdrehung um eine durch die Anordnung der Materialströme sowie in Richtung der Fließrichtung der Materialströme verlaufenden Achse zur Bildung einer schraubenlinien- und/oder wellenförmigen Struktur mindestens eines der Materialien (16, 22) in die Kavität (14, 112) eingebracht werden.
B25. Verfahren nach Ziffer B23 oder B24, wobei zumindest eines der Materialien (16, 22), welches zugeführt wird, rieselfähig ist und es sich insbesondere um ein Pulvermaterial handelt.
B26. Verfahren nach einem der Ziffern B23 bis B25, wobei neben rieselfähigen Materialien (16, 22) auch ein oder mehr Materialien mit eigenformstabiler Struktur in z. B. Strang-, Streifen- oder Bandform in die Kavität (14, 112) eingebracht werden.
B27. Verfahren zum Verdichten von Material, wobei
   - eine Kavität (14, 112) mittels eines Verfahrens nach mindestens einer der Ziffern B23 bis B26 mit Material gefüllt wird und
   - das Material innerhalb der Kavität (14, 112) verdichtet wird.
B28. Verfahren nach Ziffer B27, wobei die Verdichtung mittels mindestens eines Stempels (10, 26, 116, 119) erfolgt oder dass eine isostatische Verdichtung erfolgt.
B29. Verwendung einer Vorrichtung nach mindestens einer der Ziffern B1 bis B22 und/oder einem Verfahren nach mindestens einer der Ziffern B23 bis B28 zur Herstellung eines Wasserstoffspeicherelements in Form eines bei Einsatz als Wasserstoffspeicher formstabilen, scheiben-, block-, tabletten-, pellett- oder dergleichen -förmigen Verbundmaterials.
B30. Rohling, insbesondere erhältlich unter Verwendung einer Vorrichtung nach mindestens einer der Ziffern B1 bis B22 und/oder einem Verfahren nach mindestens einer der Ziffern B23 bis B28 mit
   - einem Körper, der mindestens zwei unterschiedliche Materialien aufweist, die in verschiedenen Bereichen des Körpers und insoweit getrennt angeordnet sind, wobei die Materialien an den Grenzen der Bereiche des Körpers, in denen sie angeordnet sind, aneinandergrenzen.
B31. Rohling nach Ziffer B30, wobei mindestens ein Material innerhalb des Körpers helixförmig angeordnet ist.
B32. Rohling nach Ziffer B30 oder B31, wobei der Körper mindestens ein drittes Material aufweist, wobei mindestens zwei, vorzugsweise drei bzw. insbesondere sämtliche Materialien in Pulverform hergestellt sind oder mindestens eines der Materialien, z. B. das dritte Material, Strang-, Streifen- oder Bandform aufweist, wobei dieses dritte Material insbesondere schraubenlinienförmig angeordnet und in die anderen Materialien des Körpers eingebettet ist.
B33. Befüllvorrichtung (120) für eine Pressenvorrichtung nach einer der Ziffern B1 bis B21 zum Zuführen von zumindest einem ersten und einem zweiten Material, mit einem Mündungsquerschnitt der Befüllvorrichtung (120), der zumindest einen ersten Bereich und einen davon abgetrennten zweiten Bereich zum parallelen, getrennten Zuführen des ersten und des zweiten Materials in eine Kavität aufweist, wobei die Befüllvorrichtung (120) eine Drehachse aufweist, um die die Befüllvorrichtung (120) drehbar während des Zuführens ist.

### BEZUGSZEICHENLISTE

- 1: Pulvermaterial
- 2: Pulvermaterial
- 3: Pulvermaterial
- 4: Pulvermaterial
- 5: Kammer
- 6: Kammer
- 7: Kammer
- 8: Kammer
- 9: Pressling
- 10: Unterstempel
- 12: Teilfüllraum
- 12': Teilfüllraum
- 12": Teilfüllraum
- 14: Matrizenkavität
- 16: Material
- 18: Füller
- 18': Rotationsfüller
- 20: Matrizenoberseite
- 22: Material
- 24: Füller
- 26: Oberstempel
- 28: Matrize
- 30: Maschinenlängsachse
- 32: Pressling
- 34: Kammer
- 36: Kammer
- 100: Presse
- 110: Matrize
- 112: Kavität
- 114: Mittenachse
- 116: Unterstempel
- 118: Rotationsfüller
- 119: Oberstempel
- 120: Befülleinrichtung
- 122: Öffnung
- 124: Pulvermaterial
- 126: Pulvermaterial
- 128: Pulvermaterial
- 130: Kammer
- 132: Kammer
- 134: Kammer
- 136: Antrieb
- 138: Einlassanordnung
- 140: Einlassöffnung
- 142: Einlassöffnung
- 144: Einlassöffnung
- 146: Kammerwand
- 148: Kammerwand
- 150: Kammerwand
- 152: Auslassöffnungsanordnung
- 154: Einschnürung
- 156: Auslassöffnung
- 158: Auslassöffnung
- 160: Auslassöffnung
- 162: Mittenachse
- 164: Kammstruktur
- 166: Kammstruktur
- 168: Helix
- 169: Zentrum
- 170: Rotationsfüller
- 172: Trennwand
- 173: Kammer
- 174: Kammerwand
- 176: Kammerwand
- 178: Kammerwand
- 180: Außenkammer
- 182: Kammer
- 184: Umlenkelement

## Patentansprüche

1. Pressenvorrichtung mit einer Vorrichtung zur Befüllung eines Formwerkzeugs der Pressenvorrichtung mit mindestens zwei verschiedenen Materialien, mit
- einer mit den mindestens zwei Materialien (124, 126, 128) zu befüllenden Kavität (112) und
- einer Befülleinrichtung (120) zum Auslassen der mindestens zwei Materialien (124, 126, 128) zwecks Einbringung dieser Materialien (124, 126, 128) in unterschiedliche Bereiche der Kavität (112),
- wobei die Befülleinrichtung (120) mindestens zwei getrennte Kammern (130, 132, 134) oder mindestens zwei Kammerbereiche einer gemeinsamen Kammer zur gleichzeitigen Zuführung der mindestens zwei Materialien (124, 126, 128), direkt aneinander angrenzend oder örtlich getrennt voneinander, zur Einbringung derselben in die Kavität (112) als zumindest teilweise voneinander unterscheidbare Schichten aufweist, und
- mit einer relativen Rotationsbewegung zwischen der Befülleinrichtung (120) und der Kavität (112), vorzugsweise um eine gemeinsame Achse, vorzugsweise um eine gemeinsame Mittenachse, während eines Befüllvorgangs.

2. Pressenvorrichtung nach Anspruch 1, **dadurch gekennzeichnet, dass** die Befülleinrichtung (18, 24, 120) ein Einwirkelement wie z. B. ein Rakel, einen Kamm, einen Abstreifer, eine Rolle, eine Leiste oder dergleichen zur Interaktion mit zumindest einem in die Kavität (14, 112) eingebrachten Material, insbesondere zur Interaktion zwecks Ausrichtens mindestens eines nicht-kugeligen Materials und/oder eines nicht-kugeligen Bestandteils dieses Materials und/oder zur Beeinflussung der Verteilung des mindestens einen Materials und/oder eines Bestandteils dieses Materials zur Erzeugung eines Verteilungsgradienten aufweist.

3. Pressenvorrichtung zur Herstellung eines Presslings mit
- einer mit den Merkmalen mindestens eines der vorhergehenden Ansprüche ausgebildeten Vorrichtung zur Befüllung eines Formwerkzeugs für den Pressling mit mindestens zwei verschiedenen Materialien (16, 22) und
- einer Verdichteinrichtung zur Verdichtung von Material (16, 22) innerhalb der Kavität (14, 112).

4. Pressenvorrichtung nach Anspruch 3, **dadurch gekennzeichnet, dass** die Verdichteinrichtung mindestens einen in die Kavität (14, 112) eintauchbaren Stempel (10, 26, 116, 119) aufweist.

5. Pressenvorrichtung nach Anspruch 3 oder 4, **dadurch gekennzeichnet, dass** die Kavität (14, 112) aus einer Durchgangsöffnung in einer Matrize (28, 110) und einem die Durchgangsöffnung zu einer Seite hin verschließenden ersten Stempel (10, 116) gebildet ist und dass ein zweiter Stempel (26, 119) vorgesehen ist, wobei mindestens der zweite Stempel (26, 119) in Richtung auf den ersten Stempel (10, 116) in die Kavität (14, 112) bzw. innerhalb der Kavität (14, 112) verfahrbar ist.

6. Verfahren zur Befüllung eines Formwerkzeugs einer Pressenvorrichtung, vorzugsweise einer Pulverpresse mit mindestens zwei verschiedenen Materialien, vorzugsweise mit einer Vorrichtung nach einem der Ansprüche 1 bis 5, wobei bei dem Verfahren
- mindestens zwei verschiedene Materialien (16, 22) zur Befüllung einer Kavität (14, 112) ausgegeben und in die Kavität (14, 112) eingebracht werden,
- wobei die mindestens zwei Materialien (16, 22) in verschiedenen Bereichen einer Befülleinrichtung (18, 24, 120) unter Relativverdrehung von Befülleinrichtung (18, 24, 120) und Kavität (14, 112) aus der Befülleinrichtung (18, 24, 120) ausgegeben sowie in verschiedene Bereiche der Kavität (14, 112) eingebracht werden;
wobei das Material (16, 22) vor, während und/oder nach der Befüllung der Kavität (14, 112) ausgerichtet wird.

7. Verfahren nach Anspruch 6, wobei die Ausrichtung des Materials (16, 22) durch ein Einwirkelement mit Kontaktfläche erfolgt, vorzugsweise in der Form eines Kamms, einer glatten oder auch konturierten Leiste oder einer Rolle; wobei das Einwirkelement mittels einer Verfahrvorrichtung soweit verfahrbar ist, dass diese in Kontakt mit dem in die Kavität (14, 112) eingefüllten Material (16, 22) gerät, wobei die Verfahrvorrichtung das Einwirkelement im Material (16, 22) verfährt.

8. Verfahren nach Anspruch 6 oder 7, **dadurch gekennzeichnet, dass** die Materialien (16, 22) zeitgleich als nebeneinander verlaufende Materialströme intermittierend oder kontinuierlich austreten und dass die Materialströme unter Verdrehung um eine durch die Anordnung der Materialströme sowie in Richtung der Fließrichtung der Materialströme verlaufenden Achse zur Bildung einer schraubenlinien- und/oder wellenförmigen Struktur mindestens eines der Materialien (16, 22) in die Kavität (14, 112) eingebracht werden.

9. Verfahren nach einem der Ansprüche 6 bis 8, **dadurch gekennzeichnet, dass** zumindest eines der Materialien (16, 22), welches zugeführt wird, rieselfähig ist und es sich insbesondere um ein Pulvermaterial handelt.

10. Verfahren nach einem der Ansprüche 6 bis 9, **dadurch gekennzeichnet, dass** neben rieselfähigen Materialien (16, 22) auch ein oder mehr Materialien mit eigenformstabiler Struktur in z. B. Strang-, Streifen- oder Bandform in die Kavität (14, 112) eingebracht werden.

11. Verfahren zum Verdichten von Material, wobei
- eine Kavität (14, 112) mittels eines Verfahrens nach mindestens einem der Ansprüche 6 bis 10 mit Material gefüllt wird und
- das Material innerhalb der Kavität (14, 112) verdichtet wird.

12. Verfahren nach Anspruch 11, **dadurch gekennzeichnet, dass** die Verdichtung mittels mindestens eines Stempels (10, 26, 116, 119) erfolgt oder dass eine isostatische Verdichtung erfolgt.

13. Verwendung einer Vorrichtung nach mindestens einem der Ansprüche 1 bis 5 und/oder einem Verfahren nach mindestens einem der Ansprüche 6 bis 12 zur Herstellung eines Wasserstoffspeicherelements in Form eines bei Einsatz als Wasserstoffspeicher formstabilen, scheiben-, block-, tabletten-, pellett- oder dergleichen -förmigen Verbundmaterials.

14. Rohling, insbesondere erhältlich unter Verwendung einer Vorrichtung nach mindestens einem der Ansprüche 1 bis 5 und/oder einem Verfahren nach mindestens einem der Ansprüche 6 bis 12 mit
- einem Körper, der mindestens zwei unterschiedliche Materialien aufweist, die in verschiedenen Bereichen des Körpers und insoweit getrennt angeordnet sind, wobei die Materialien an den Grenzen der Bereiche des Körpers, in denen sie angeordnet sind, aneinandergrenzen.

15. Rohling nach Anspruch 14, **dadurch gekennzeichnet, dass** mindestens ein Material innerhalb des Körpers helixförmig angeordnet ist.

16. Rohling nach Anspruch 14 oder 15, **dadurch gekennzeichnet, dass** der Körper mindestens ein drittes Material aufweist, wobei mindestens zwei, vorzugsweise drei bzw. insbesondere sämtliche Materialien in Pulverform hergestellt sind oder mindestens eines der Materialien, z. B. das dritte Material, Strang-, Streifen- oder Bandform aufweist, wobei dieses dritte Material insbesondere schraubenlinienförmig angeordnet und in die anderen Materialien des Körpers eingebettet ist.

17. Befüllvorrichtung (120) für eine Pressenvorrichtung nach einem der Ansprüche 1 bis 5 zum Zuführen von zumindest einem ersten und einem zweiten Material, mit einem Mündungsquerschnitt der Befüllvorrichtung (120), der zumindest einen ersten Bereich und einen davon abgetrennten zweiten Bereich zum parallelen, getrennten Zuführen des ersten und des zweiten Materials in eine Kavität aufweist, wobei die Befüllvorrichtung (120) eine Drehachse aufweist, um die die Befüllvorrichtung (120) drehbar während des Zuführens ist.
